(19) **Europäisches Patentamt**
**European Patent Office**
**Office européen des brevets**

(11) **EP 3 972 821 B1**

(12) # FASCICULE DE BREVET EUROPEEN

(45) Date de publication et mention de la délivrance du brevet:
**25.06.2025 Bulletin 2025/26**

(21) Numéro de dépôt: **20737260.8**

(22) Date de dépôt: **20.05.2020**

(51) Classification Internationale des Brevets (IPC):
**G01B 11/08** *(2006.01)*    **G01B 11/12** *(2006.01)*
**G01B 11/24** *(2006.01)*    **F16L 13/02** *(2006.01)*

(52) Classification Coopérative des Brevets (CPC):
**G01B 11/24; F16L 13/02; G01B 11/08; G01B 11/12**

(86) Numéro de dépôt international:
**PCT/FR2020/050844**

(87) Numéro de publication internationale:
**WO 2020/234546 (26.11.2020 Gazette 2020/48)**

(54) **PROCÉDÉ ET TERMINAL DE GÉNÉRATION D'UN INDICE DE COMPATIBILITÉ ENTRE DEUX EXTREMITÉS DE DEUX TUBES**

VERFAHREN UND ENDGERÄT ZUR ERZEUGUNG EINES KOMPATIBILITÄTSINDEX ZWISCHEN ZWEI ENDEN ZWEIER ROHRE

METHOD AND TERMINAL FOR GENERATING AN INDEX OF COMPATIBILITY BETWEEN TWO ENDS OF TWO TUBES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2019 FR 1905272**

(43) Date de publication de la demande:
**30.03.2022 Bulletin 2022/13**

(73) Titulaire: **Vallourec Tubes France
92190 Meudon (FR)**

(72) Inventeurs:
• **GOTUSSO, Nicolas
92190 Meudon (FR)**
• **ARMAND, Mélanie
92190 Meudon (FR)**

(74) Mandataire: **Cabinet Netter
36, avenue Hoche
75008 Paris (FR)**

(56) Documents cités:
**US-A1- 2011 079 584     US-A1- 2018 264 556
US-B1- 7 325 326**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 972 821 B1

**Description**

Le domaine de l'invention concerne le domaine des méthodes pour assurer une bonne réalisation des joints entre éléments tubulaires, tels que des line pipes ou pipelines notamment destinés à acheminer des hydrocarbures ou leurs dérivés de l'industrie pétrolière. Plus particulièrement, le domaine de l'invention se rapporte aux méthodes prenant en compte la géométrie aux extrémités desdits éléments tubulaires pour organiser leur assemblage. Le domaine de l'invention concerne également les systèmes permettant de mettre en œuvre de telles méthodes et les éléments tubulaires eux-mêmes.

L'assemblage de pipelines ou d'éléments tubulaires en acier de plusieurs mètres de long, par exemple, destinés au convoyage d'hydrocarbures et leurs dérivés nécessite un traitement particulier à leur extrémité pour assurer leur jonction étanche par soudage. Cette jonction est réalisée sur le lieu où ces pipelines seront installés ou assemblés (reeling). Les éléments tubulaires assemblés entre eux doivent être particulièrement étanches et doivent assurer des contraintes mécaniques fortes. Dans cet objectif d'assemblage sécurisé, les jonctions réalisées entre les différents éléments tubulaires nécessitent une étape préalable de vérification de la géométrie des extrémités distales de ces éléments tubulaires. Parfois, un usinage de forme est nécessaire pour permettre un assemblage par soudure. Le soudage des extrémités nécessite aussi un usinage d'un chanfrein spécifique pour la réalisation du soudage. La qualité et la fiabilité de la soudure réalisée dépend en grande partie des extrémités des tubes mis en vis-à-vis.

Actuellement, il existe des moyens permettant de mesurer les propriétés géométriques des extrémités des éléments tubulaires. Ces moyens peuvent utiliser différentes techniques plus ou moins précises et plus ou moins pratiques d'utilisation. Elles permettent notamment d'anticiper les conditions de la mise en regard d'éléments tubulaires entre eux afin de proposer un optimum de configuration pour le soudage à venir.

On comprend qu'une compatibilité entre deux éléments tubulaires est requise notamment au regard des manœuvres nécessaires pour définir un alignement fonctionnel lors de l'opération de soudage. Un léger désalignement n'est pas nécessairement critique, il existe des marges opérationnelles pour procéder à la soudure des éléments. Ces écarts sont également connus comme une mesure de hi-lo dans la littérature technique du domaine de l'invention. Des normes établies par les constructeurs prescrivent des tolérances pour un diamètre extérieur donné, et des pour des épaisseurs de paroi données.

Par exemple, le document US-9074881 décrit un système permettant de mesurer des propriétés géométriques à l'extrémité des éléments tubulaires, ces mesures étant réalisées sur des extrémités présentant déjà un chanfrein usiné en vue d'une soudure à venir. La mesure est alors réalisée juste avant le soudage pour déterminer les conditions de la mise en regard et l'alignement des deux éléments tubulaires à souder. Ces mesures permettent de déterminer les mouvements à impulser à l'élément tubulaire libre, en minimisant une distance axiale entre les deux tubes à souder et en minimisant les différences entre diamètres intérieurs et respectivement extérieurs (hi-lo) de ces deux extrémités.

En fonction de la mesure, soit les tubes peuvent être rapprochés pour être soudés, soit il est nécessaire de corriger les positions relatives. Cette correction peut nécessiter la rotation de l'élément tubulaire libre relativement à celui déjà en place. A chaque correction de position, il est nécessaire de refaire les mesures pour analyser si cette nouvelle position permet une soudure conforme.

Un inconvénient d'un tel système est que lors d'une mesure non conforme, il y a un temps de manipulation nécessaire pour réaliser cette optimisation qui ralentit le rythme auquel les soudures sont réalisées et où l'allongement du line pipe est réalisé. Dans les pires scénarios, il n'existe aucune rotation permettant d'assurer de manière prédictive une soudure conforme entre deux éléments tubulaires, il est alors nécessaire de retirer l'élément tubulaire libre de la ligne de production. Il est alors nécessaire de faire une réparation par un traitement de la géométrie de son extrémité, que ce soit par formage et ou usinage complet, ou mise en quarantaine si aucun traitement immédiat ne permet son adaptation. Or à ce stade très tardif, sur les sites d'assemblage de line pipe, il est très coûteux d'avoir à perdre du temps sur un élément tubulaire incompatible, de même les coûts d'exploitations des structures ne tolèrent pas un ralentissement des cadences de production.

Ces opérations sont longues et couteuses. Elles nécessitent un personnel qualifié et des manipulations compliquées pour ces éléments tubulaires très lourds et de grandes dimensions.

Le document WO2009126023 décrit une méthode de soudage modifiant les paramètres du soudage pour compenser les différences géométriques entre les extrémités de deux éléments tubulaires devant être assemblés. Une configuration du dispositif de soudage est réalisé en prenant en compte la géométrie des extrémités tubulaires et notamment de la partie usinée. Cette technique nécessite une configuration au cas par cas de deux éléments tubulaires devant être assemblés et complexifie le programme de soudage en allongeant le temps nécessaire au soudage.

Les documents US6273320 et US2017276260 divulguent deux méthodes d'alignement de tubes, au cours desquelles des mesures des géométries des extrémités chanfreinées de ces deux éléments tubulaires sont réalisées afin d'effectuer des manœuvres desdits éléments telles que des rotations pour identifier la meilleure configuration.

On connait également du document US7325326 un procédé permettant de déterminer un rapport pour le séquencement et l'ordonnancement d'éléments tubulaires les uns à la suite des autres de manière à former une tubulure optimale. A chaque nouvel élément tubulaire associé à la tubulure, le procédé enseigne de suivre le plan d'ordonnancement. Le plan d'ordonnancement est construit en recherchant le meilleur élément tubulaire à présenter à la suite, ce meilleur élément tubulaire étant recherché parmi le groupe des éléments tubulaires restant à associer à cette tubulure. Le meilleur élément tubulaire associable à la tubulure sera selon ce document celui pour lequel il existe une position angulaire de présentation de l'élément tubulaire par rapport à l'élément tubulaire de la tubulure en formation, position pour laquelle la somme des différences de mesure au carré sera minimale (Lowest Sum of EXPR(N)) par rapport aux valeurs calculées pour tous les autres éléments tubulaires restant à associer. Les mesures considérées sont des distances entre un axe de rotation d'un appareil de mesure et des points à la surface intérieure ou extérieure de l'élément tubulaire considéré. Ce procédé de recherche du meilleur élément ne donne aucune information sur la compatibilité globale entre deux extrémités de deux tubes.

Or il existe un besoin de réduire le nombre d'interventions à réaliser pour adapter l'extrémité d'un élément tubulaire sur site et de réduire les taux d'incompatibilité entre des éléments tubulaires pourtant présélectionnés. Il existe également un besoin d'anticipation des risques de non-compatibilité des tubes entre eux. Et il existe un besoin de faciliter la formation de la tubulure en opération, et de gagner en temps et en qualité pour chaque soudure faite. Il existe également un besoin de simplifier la gestion des éléments tubulaires disposés en quarantaine qui impose de créer des espaces de stockage et une manutention spécifique pour réaliser des opérations ultérieures d'amélioration de la compatibilité.

Il existe un besoin pour pallier les inconvénients précités.

A cet effet, l'invention a pour objet un procédé de génération d'un indice de compatibilité entre deux extrémités de deux tubes notamment avant des opérations de soudage, ledit procédé comportant les étapes de :

- marquage d'une référence angulaire ($M_0$) sur chacune des deux extrémités ;
- mesure orbitale d'une caractéristique relative au profil de chacune des extrémités ;
- détermination d'un indice de compatibilité angulaire ($IND_{thêtak}$) entre les deux extrémités pour un écart angulaire ($\Theta$, thêta) entre les références angulaires desdites extrémités, cet indice de compatibilité angulaire dérivant d'un maximum de différence entre les mesures orbitales, ce maximum étant recherché pour des emplacements du profil mis en regard,
- itération de la détermination de l'indice de compatibilité angulaire pour plusieurs valeurs d'écart angulaire entre les références angulaires desdites extrémités ;
- génération d'une note globale de compatibilité ($Hk$) entre ces deux extrémités, la note globale de compatibilité étant fonction des indices de compatibilité angulaire déterminés pour plusieurs valeurs d'écart angulaire.

Avantageusement, la mesure orbitale d'une caractéristique relative au profil selon le procédé de l'invention peut être une mesure de rayon. En particulier, la mesure orbitale peut être une mesure de rayon déterminée relativement à un centre virtuel ($Cv$) pour lequel les différences de rayon sont minimum. Cette correction permet de déterminer un centre à l'extrémité nécessairement imparfaite. En effet, les tubes selon l'invention sont issus de procédure de fabrication industrielle lourde, et même si l'objet est de prévoir des extrémités parfaitement circulaires et d'épaisseur radiale constante, la réalité des tubes produit tolère une certaine variation. Avantageusement, lorsque la mesure de rayon est une mesure de rayon intérieur, alors le centre virtuel peut être déterminé en fonction des rayons intérieurs.

Alternativement, ou en complément, la mesure de rayon peut aussi ou également être une mesure de rayon extérieur. Dans ce cas, la mesure orbitale peut être une mesure de rayon extérieur déterminée relativement à un centre virtuel qui lui aura été obtenu en fonction des rayons intérieurs en recherchant un centre virtuel tel que des différences entre ces rayons intérieurs sont minimum.

Avantageusement, la mesure orbitale est effectuée selon une même convention horaire relativement à la référence angulaire, de telle sorte que, pour un écart angulaire ($\Theta$, thêta) donné entre les références angulaires des deux tubes, on peut itérer, pour chaque angle de mesure ($\varphi$), également noté « phi », le calcul de différence entre la valeur de la mesure orbitale à cet angle de mesure sur un premier tube et la valeur de la mesure orbitale observée sur le deuxième tube à un angle inversé de cet angle de mesure, cet angle inversé ($360° - \varphi$), 360 - phi, correspondant à 360° minoré de la valeur de l'angle de mesure ($\varphi$), phi, de telle sorte qu'à l'issue des itérations, l'itération pour laquelle la différence de mesures orbitales des deux extrémités mises en regard est maximale peut être identifiée, ainsi que la valeur de cette différence maximale correspondant au maximum de différence entre les mesures orbitales pour cet écart angulaire ($\Theta$, thêta).

De préférence, l'étape (d) peut être réalisée pour des valeurs d'écart angulaire augmentant successivement d'un pas de moins de 5 ° et de préférence avec un pas de 1° entre chaque écart angulaire. De préférence, la première valeur d'écart angulaire peut être nulle, et la dernière être de 359°. Il peut par exemple y avoir 359 itérations à l'étape (d) en plus de la détermination de l'étape (c) soit 360 déterminations d'indice de compatibilité angulaire pour 360 valeurs d'écart angulaire possibles entre les références angulaires desdites extrémités. De manière spécifique, pour des tubes à soudures longitudinales, et pour tenir compte de contrainte d'assemblage liées à l'emplacement de la soudure, il peut être envisagé de ne réaliser cette itération que pour un arc angulaire de l'ordre de 270° centré sur l'emplacement de la soudure longitudinale.

Selon le procédé selon l'invention, la note globale de compatibilité (Hk) entre deux extrémités prend une unique note discrète parmi :

- compatible (c), ou
- compatible sous réserve de présentation angulaire contrôlée (cc), ou
- non compatible (nc).

Par exemple, la note globale de compatibilité (Hk) peut dépendre d'un seuil de HiLo (Hlimit) défini comme seuil de tolérance maximum pour l'ensemble des indices de compatibilité angulaire ($IND_{th\hat{e}tak}$) entre les deux extrémités déterminées pour chaque écart angulaire ($\Theta$, thêta). En complément, la note globale de compatibilité (Hk) peut aussi dépendre d'une taille angulaire de plage seuil (S) pour laquelle il existe un groupe continu de valeur d'écart angulaire ($\Theta$, thêta) où les indices de compatibilité angulaire ($IND_{th\hat{e}tak}$) sont inférieurs au seuil de HiLo (Hlimit).

Dans ce cas, la note globale de compatibilité peut tenir compte de l'évolution des notes successivement obtenues lors de l'itération de la détermination de l'indice de compatibilité angulaire pour des valeurs d'écart angulaire successives entre les références angulaires desdites extrémités.

En conséquence, lorsque la note globale de compatibilité (Hk) entre deux extrémités prend la note discrète « compatible (c) », alors tous les indices de compatibilité angulaire (INDthêtak) mesurés pour chacun des écarts angulaires, peuvent être inférieurs au seuil de HiLo (Hlimit). De même, lorsque la note globale de compatibilité (Hk) entre deux extrémités prend la note discrète « compatible sous réserve de présentation angulaire contrôlée (cc) », il peut exister au moins une plage dont la taille angulaire est supérieure à ladite plage seuil. Plus cette plage est grande et plus il est statistiquement possible que lors de l'amenée à l'étape de soudage, il n'y ait pas ou que très peu de mouvements de rotation à impulser à l'élément tubulaire libre. De manière plus spécifique, la plage peut être également caractérisée par une courbe représentant l'évolution des indices de compatibilité angulaire (INDthêtak) en fonction de l'évolution de l'écart angulaire ($\Theta$, thêta). Par exemple, une plage peut être acceptable si la portion de la courbe d'évolution correspondante ne présente pas d'inflexion avec un rayon de courbure inférieur à un seuil.

En particulier, un groupe continu peut être un groupe de valeurs d'écarts angulaires ($\Theta$, thêta) successivement considérés à l'étape d'itération de la détermination de l'indice de compatibilité angulaire. Et, par exemple, lorsque la note globale de compatibilité (Hk) entre deux extrémités peut prendre la note discrète « compatible sous réserve de présentation angulaire contrôlée (cc) », le procédé peut comprendre une étape (f) de marquage d'une zone admissible (Za) sur l'une des deux extrémités pour localiser angulairement, relativement au marquage angulaire ($M_0$), une plage (P1) dont la taille angulaire est supérieure à la plage seuil et où il existe un groupe continu de valeurs d'écart angulaire ($\Theta$, thêta) où les indices de compatibilité angulaire (INDthêtak) sont inférieurs au seuil de HiLo (Hlimit).

L'invention permet également de mettre en œuvre un procédé de génération d'une statistique de compatibilité (% Tn, %$N_{Tn}$) dans un groupe de n tubes pour lesquels une note globale de compatibilité a été déterminée selon le procédé de génération d'un indice de compatibilité entre deux extrémités de deux tubes selon l'invention, pour chacune des paires d'extrémités possibles du groupe de n tubes, tel que pour chaque extrémité on définit

sa proportion (a, e) de compatibilité « C1 » avec l'ensemble des extrémités des autres tubes
sa proportion (b, f) de compatibilité partielle « C2 » avec l'ensemble des extrémités des autres tubes sous réserve d'une présentation angulaire contrôlée entre les extrémités, et
sa proportion (c, g) de non-compatibilité « C3 » avec l'ensemble des extrémités des autres tubes,
ces trois proportions faisant 100%, et représentant ensemble la statistique de compatibilité de chaque tube au sein du groupe.

De préférence, pour chaque tube (Tn) on peut attribuer une statistique de compatibilité (%Tn) pour ce tube correspondant aux proportions obtenues par l'une de ses deux extrémités présentant la plus haute proportion de non-compatibilité.

Un des intérêts de l'invention est de proposer un procédé de partition d'un groupe de n tubes tel que les tubes sont répartis en au moins deux lots en fonction des statistiques de compatibilité de chacun des tubes, tel que chaque lot comporte un nombre équivalent de tubes ayant une proportion de non-compatibilité C3 inférieure à un seuil de compatibilité.

Par exemple, lors de la partition d'un groupe de n tubes, l'opérateur peur mettre en œuvre une étape de marquage des tubes au cours de laquelle un marquage de compatibilité ($M_C$) est inscrit sur au moins certain tubes, le marquage ($M_C$) comportant une information générée à partir du procédé selon l'invention, en particulier, le marquage peut permettre d'identifier les tubes ayant une proportion de non-compatibilité C3 supérieure audit seuil de compatibilité.

L'invention a également pour objet un terminal électronique comportant une interface de lecture d'un identifiant d'un tube, une interface pour recevoir des données de mesure orbitale d'une caractéristique relative au profil d'une extrémité de ce tube; un calculateur pour transformer les mesures orbitales en fonction d'un centre virtuel de ladite extrémité, ledit calculateur étant configuré pour générer une note globale de compatibilité d'un couple de tubes selon le procédé de l'invention.

L'invention a aussi pour objet un ensemble composé d'un tel terminal électronique et d'un groupe de n tubes comportant chacun un marquage angulaire ($M_0$) à chacune de leurs extrémités distales, chaque extrémité distale de chaque tube comportant $2*(n-1)$ notes globales de compatibilité (Hk) avec chacune des extrémités distales des $(n-1)$ autres tubes du groupe, ces notes globales de compatibilité étant obtenues par la mise en œuvre du procédé selon l'invention, les notes globales de compatibilités de chacune des extrémités de tube avec les extrémités de autres tubes du groupe étant mémorisées dans le terminal électronique.

Plus particulièrement, la localisation angulaire, relativement au marquage angulaire ($M_0$), de plage dont la taille angulaire peut être supérieure à la plage seuil, et où il existe un groupe continu de valeurs d'écart angulaire ($\Theta$, thêta) où les indices de compatibilité angulaire ($IND_{thêtak}$) sont inférieurs au seuil de HiLo (Hlimit), est mémorisé dans le terminal électronique pour chacune des $2*n*(n-1)$ combinaisons possibles entre ces n tubes.

Enfin, l'invention vise également un produit programme d'ordinateur comportant un calculateur et une mémoire pour la mise en œuvre des étapes du procédé selon l'invention.

D'autres caractéristiques et avantages de l'invention ressortiront à la lecture de la description détaillée qui suit, en référence aux figures annexées, qui illustrent :

[Fig.1] Figure 1 : les différentes étapes d'acheminement d'un tube, ou d'un groupe de tubes depuis sa conception jusqu'à son installation sur site ;

[Fig.2] Figure 2 : une vue extérieure d'un tube selon l'invention ;

[Fig.3] Figure 3 : une vue en perspective de face d'une extrémité d'un tube selon l'invention ;

[Fig.4] Figure 4 : une vue de détail d'un profil d'extrémité d'une extrémité d'un tube, à une échelle grossie afin d'améliorer la visibilité des variabilités de rayon intérieur et extérieur pour toute la circonférence de ladite extrémité, la variabilité étant observée avec une précision de 6 mm alors que les valeurs de rayons représentées sont comprises entre 180 mm et 186 mm dans ladite représentation ;

[Fig.5] Figure 5 : un exemple de superposition entre une extrémité A d'un tube T1 et une extrémité B d'un tube T2, dans lequel l'écart angulaire $\Theta$, thêta, entre les références angulaires respectives $M_{0T1A}$ et $M_{0T2B}$ est de 0° ;

[Fig.6] Figure 6 : une première représentation graphique d'un indice de compatibilité angulaire $IND_{\Theta k}$, également noté $IND_{thêtak}$, dans l'exemple où k=T1AT2B, obtenu à part d'un mode de réalisation du procédé de l'invention ; [Fig.7A] Figure 7A : une vue de détail d'un profil d'extrémité d'une extrémité A d'un tube T1 mis en regard d'une extrémité B d'un tube T2, à une échelle grossie, avec un écart angulaire optimal entre les références angulaires respectives de ces extrémités ;

[Fig.7B] Figure 7B : une vue similaire à la Figure 7A avec un écart angulaire entre les références angulaires respectives de ces extrémités, tel que la présentation de ces extrémités n'est pas conforme ;

[Fig.8] Figure 8 : une représentation schématique des emplacements des plages angulaires conformes pour l'extrémité A du tube T1, lorsque cette extrémité est destinée à être mise en regard de l'extrémité B d'un tube T2 ; [Fig.9A] Figure 9A et

[Fig.9B] Figure 9B : des vues en coupe schématique de chanfreins formés aux extrémités de deux tubes en vis-à-vis

[Fig.10] Figure 10 : un exemple de classification de couples de tubes obtenue à partir d'un mode de réalisation du procédé de l'invention,

[Fig.11] Figure 11 : un exemple de tableau reportant les statistiques de compatibilité de tubes d'un groupe de tubes, les statistiques de compatibilité étant obtenues à partir d'un mode de réalisation du procédé de l'invention.

Dans la suite de la description, un tube désigne un élément tubulaire ou un pipeline de grandes dimensions, notamment de plusieurs mètres de long, et de section sensiblement circulaire. Par exemple, ce tube est destiné à être utilisé pour l'acheminement d'une matière première tel qu'un hydrocarbure. Le tube est de préférence en acier et il est destiné à être assemblé à d'autres tubes similaires par soudage. Les tubes en acier auxquels s'applique notamment l'invention peuvent être des tubes sans soudure ou des tubes obtenus à partir d'une feuille mise en forme et dont les bords longitudinaux sont soudés longitudinalement.

Pour optimiser le soudage, il est préférable d'avoir un fort recouvrement des extrémités des tubes placés en regard. Dans la présente description, on va considérer un premier tube T1 à souder à un deuxième tube T2.

L'industrie pétrolière fixe des spécifications et des seuils d'acceptabilité en matière d'écart de recouvrement entre deux extrémités de tubes lorsque ces extrémités sont disposées l'une en regard de l'autre. Dans le domaine technique de l'invention, et plus particulièrement de l'installation de linepipe, on parle de spécification de « HiLo ». Cette spécification de « HiLo » peut désigner les critères d'acceptabilité en matière d'écart entre les diamètres ou rayons intérieurs d'un tube relativement à un deuxième tube. Cette spécification de « HiLo » peut aussi viser des critères d'acceptabilité en matière d'écart entre les diamètres ou rayons extérieurs de ce tube relativement au deuxième tube. Enfin cette spécification de « HiLo » peut encore viser des critères d'acceptabilité en matière de surface de recouvrement entre les extrémités des deux tubes entre eux.

Les valeurs de HiLo mesurées sont dépendantes des positions respectives des tubes entre eux. Avec un incrément de 1 degré par rotation du premier tube relativement au deuxième tube, il existe alors 360 configurations de présentations de ces deux tubes entres eux. Pour chacune de ces configurations, le critère de HiLo pourra être contrôlé, que ce soit en matière de rayon intérieur et/ou de rayon extérieur, et/ou de taux de recouvrement entre les surfaces d'extrémité des deux tubes.

Des seuils de tolérance peuvent être fixés pour chacun de ces critères.
Les tolérances de fabrication des tubes destinés à former des line pipe sont notamment renseignées dans les normes API 5L.

Dans la présente description, un profil d'extrémité d'un tube comprend des données décrivant la circonférence intérieure et extérieure réelle de ce dernier. Il peut également être appelé un profil de section ou un profil de rayons.

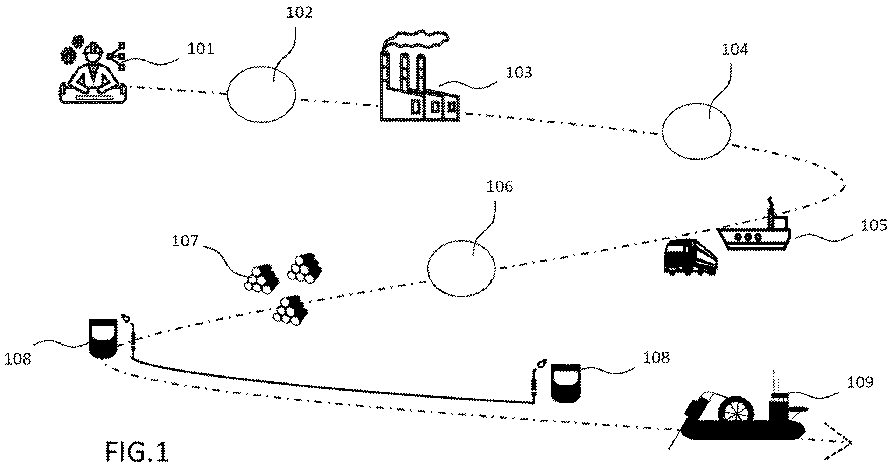

La figure 1 représente les principales étapes d'acheminement d'un tube 1 depuis sa conception jusqu'à son installation sur un site donné.

Les étapes de conception 101 et de conception prédictive 102 permettent de définir les principales caractéristiques techniques d'un tube, dont notamment les caractéristiques géométriques et structurelles. Les données géométriques peuvent comprendre, par exemple : la longueur, le diamètre intérieur, le diamètre extérieur ou encore l'épaisseur desdits tubes. Les données structurelles peuvent comprendre des données de matériau, de finition, de résistance mécanique, de réponse en contrainte ou encore des données de traitements thermique, de traitement de surface ou encore des données relatives à une soudure longitudinale. En outre, cette étape permet de définir un ensemble de données du cycle de vie du tube, tel que son identifiant d'usine, l'identifiant de fabricant ou encore son site de destination pour son installation, etc.

L'invention permet notamment de fixer, à cette étape de conception, des données relatives aux marges de tolérance des valeurs de rayon calculées sur la circonférence des sections d'extrémité des tubes. Une donnée décrivant la spécification HiLo peut être définie également.

L'étape de conception prédictive 102 permet, par exemple, de définir une stratégie de préparation des tubes selon les caractéristiques des tubes définis à l'étape de conception 101. L'étape de préparation peut être, par exemple, une étape de mise en forme des extrémités pour en améliorer la circularité.

La figure 1 comprend une étape 103 définissant l'étape au cours de laquelle les tubes sont fabriqués ou finalisés ou réparés. Typiquement, certaines étapes de pré-assemblage (par exemple tels que des tubes assemblés selon la technologie Pipe-In-Pipe), de traitement de surface ou de finition des tubes (par exemple par ajout d'un revêtement extérieur, et ou un revêtement intérieur résistant à la corrosion CRA) peuvent être mises en œuvre à cette étape. En outre, cette étape peut correspondre à des opérations de préparation ou de traitement des extrémités des tubes 1, telles que des opérations de mise en forme (par exemple par refoulement ou encore par forgeage) et/ou d'usinage en vue d'adoucir les profils intérieurs et/ou extérieurs des extrémités des tubes.

Une étape 104 représente une étape au cours de laquelle on collecte des données sur chacun des tubes produits T1, T2, ... Tn. Des mesures de grandeurs physiques sont réalisées sur les tubes. Ces mesures comportent notamment sur la géométrie des extrémités des tubes. Certaines données collectées au cours de cette étape 104 peuvent être, par exemple, encodées sur un support. Ce support encodé peut par exemple prendre la forme d'un code en deux dimensions d'informations avec des figures géométriques élémentaires juxtaposées, généralement des carrés blancs et noirs, ou encore un code numérique de type QR code ou Flash code. En fonction des modes de réalisation, les supports d'informations peuvent être passifs ou actifs.

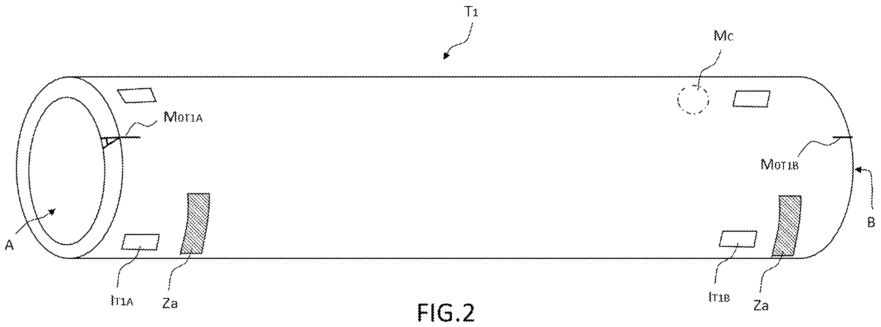

De préférence selon l'invention, il est créé un support d'information I spécifique à chaque extrémité de chaque tube. Il y aura comme par exemple, comme représenté à la figure 2, des supports d'information respectivement $I_{T1A}$ et $I_{T1B}$ à chacune des extrémités A et respectivement B d'un tube T1. Par exemple, il peut y avoir trois supports d'information équirépartis à chaque extrémité. Ce support d'information I est par exemple collé à la surface du tube, en particulier à proximité de l'extrémité concernée. Le support d'information I peut être également gravé.

En particulier, le support d'information I peut en plus des données collectées à l'étape 104 comprendre également des données relatives aux spécificités de l'étape de fabrication 103.

Comme cela est représenté à la Figure 1, le groupe de tubes fabriqués à l'étape 103 fera nécessairement l'objet d'une étape de transport 105 jusqu'à un lieu de stockage 107, lieu à partir duquel ils feront soit de nouveau l'objet d'un transport 105 et ou immédiatement l'objet d'une étape d'assemblage 108 par soudage bout à bout pour former une longue tubulure.

Sur la Figure 1, l'étape 104 de collecte de données est réalisée avant le transport 105. Mais tout en restant dans le périmètre de l'invention, le transport 105 peut aussi avoir lieu avant la collecte des données 104. Cette collecte des données 104 peut également être réalisée après que les tubes aient été amenés sur leur lieu de stockage 107. L'étape de collecte de données 104 est nécessairement réalisée préalablement à l'étape de soudage 108.

Au moment de la collecte de données 104, et ce pour chaque extrémité de tube, et avant que la collecte de données ne commence, un marquage de référence $M_0$ est réalisé à chacune des extrémités des tubes. La référence $M_0$

est une référence angulaire. La référence $M_0$ permet notamment de fixer un référentiel pour des mesures effectuées respectivement au niveau de la circonférence de chaque extrémité de tube.

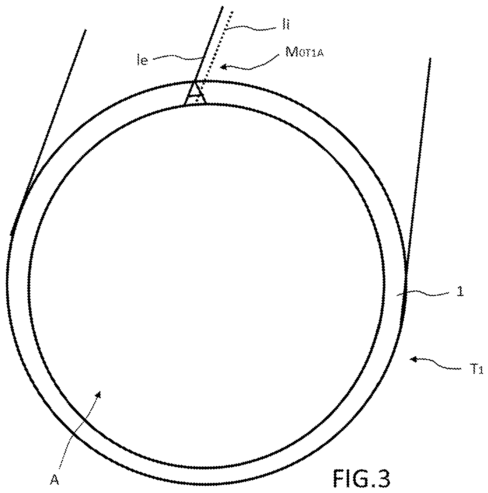

La figure 3 représente la référence $M_{0T1A}$ de l'extrémité A d'un tube T1. Elle peut notamment être marquée par une ligne usinée sur le pourtour intérieur du tube et également une ligne usinée sur le pourtour extérieur. Avantageusement, la référence $M_0$ peut également être gravée sur la face transversale 11 de l'extrémité du tube, et par exemple prendre la forme d'une lettre alphabétique gravée sur cette face avant. Dans l'exemple représenté la lettre gravée est la lettre A. La ligne intérieure « li » et la ligne extérieure « le » définissent un plan coupant la lettre formée sur la face transversale 11 de cette extrémité. Ce plan peut également passer par l'axe longitudinal du tube T1.

Pour collecter les données, une convention est notamment définie pour choisir un unique sens de rotation pour l'intégralité des mesures qui seront prises pour chacun des tubes à partir des références angulaires $M_0$ de chacune des extrémités respectivement. Le sens de rotation choisi pour la collecte des mesures est horaire, mais il peut être alternativement anti-horaire.

Une fois les données collectées et transcrites dans un support d'information I apposé sur le tube, les différents opérateurs officiant jusqu'à la mise en œuvre d'un line pipe in situ, dernière étape 109, pourront accéder aux données stockées dans ces supports d'information I, ou à tout le moins au moins jusqu'à l'étape de soudage 108. Juste avant l'étape de soudage 108, les opérateurs peuvent accéder à deux natures d'information pour chaque extrémité de tube, d'une part l'emplacement du marquage de référence $M_0$ et d'autre part aux données contenues dans le support d'information.

L'étape 108 correspond à l'assemblage des tubes, par exemple, par une opération de soudage un à un de leurs extrémités respectives. Le terme opération de soudage englobe largement toutes les étapes mises en œuvre pour permettre le soudage, à savoir et de manière non exhaustive l'alignement des tubes, la préparation d'un chanfrein à leur extrémité, leur serrage et mise en regard, et enfin les étapes de soudage à proprement parler. Cette étape précède leur mise en place opérationnelle 109, par exemple au fond d'un océan. Cette dernière étape 109 est représentée sur la figure 1.

La figure 1 mentionne une étape 106 de traitements des données collectées à l'étape de collecte 104. L'étape 106 de traitement des données comporte des simulations statistiques sont réalisées pour évaluer la compatibilité entre eux des tubes d'un groupe de tubes produits à l'étape 103, et faisant l'objet des mesures de l'étape 104. Avantageusement l'étape de traitement de données 106 peut être réalisée pendant l'étape de transport 105. Avantageusement, le traitement de données de l'étape 106 est finalisé avant le commencement de l'étape de soudage 108.

A l'étape 104, on considère un groupe de n tubes Tn. Chaque tube Tn a deux extrémités A et B. Le tube Tn comporte donc deux repères $M_0$ à chacune de ses extrémités, respectivement $M_{0TnA}$ et $M_{0TnB}$.

Les mesures de l'étape 104 peuvent être réalisées à partir d'un laser pour mesurer les caractéristiques géométriques de la section extrémale d'un tube, telles que les valeurs de rayons calculés en une pluralité de points de la circonférence. Les données collectées sont des mesures orbitales d'une caractéristique relative au profil de l'extrémité.

D'autres techniques peuvent être employées conjointement au procédé de l'invention afin d'obtenir un ensemble de valeurs caractérisant le profil de section d'une extrémité de tube, rayon intérieur, rayon extérieur, épaisseur...

Selon un mode de réalisation préféré, des rayons intérieurs sont mesurés au moyen d'un outil de mesure, par exemple de mesure laser, disposé sur un axe de rotation à l'intérieur du tube. Plusieurs mesures de rayon sont effectuées pour différentes positions autour de cet axe de rotation. Les mesures sont orbitales. L'axe supportant le dispositif de mesure n'étant pas nécessairement centré à l'intérieur du tube, ces mesures obtenues relativement à cet axe de rotation peuvent présenter des disparités.

A la fin de l'étape de mesure 104, on obtient des fonctions $f_{RiTnA}$ représentant les rayons intérieurs mesurés avec l'outil de mesure, avec pour variable l'angle $\varphi$, phi, de rotation, dans le cas présent selon une rotation selon le sens horaire relativement à la référence $M_{0TnA}$. Le cas échéant, une fonction $f_{ReTnA}$ représente les rayons extérieurs obtenus également lors de cette étape de mesure 104.

L'étape de traitement de données 106 comprend la conversion des fonctions $f_{RiTnA}$ et $f_{ReTnA}$ en fonctions recentrées $g_{RiTnA}$ et $g_{ReTnA}$. Les fonctions recentrées correspondent à des valeurs de rayon intérieur et respectivement extérieur recalculées pour tout angle $\varphi$, phi, de rotation relativement à $M_{0TnA}$ en fonction du centre virtuel $Cv_{TnA}$. En particulier, les fonctions $g_{RiTnA}$ et $g_{ReTnA}$ pourront faire l'objet des informations encodées dans les supports d'informations créés et apposées à l'extrémité TnA du tube Tn. De manière analogue les supports d'information seront créés avec les données des fonctions $g_{RiTnB}$ et $g_{ReTnB}$ de ce tube Tn pour sa deuxième extrémité B.

L'étape de traitement de données 106 requiert la détermination des centres virtuels Cv de chaque extrémité de chaque tube. Une convention sera choisie pour qu'au sein d'un groupe de tubes, les centres virtuels soient tous définis de la même manière. Dans un mode de réalisation de l'invention, les centres virtuels sont définis relativement aux mesures de rayons internes.

La détermination des centres virtuels utilise un algorithme d'optimisation itératif. A la première itération, un premier centre fictif Oi et un rayon attendu R sont déterminés dans un plan en deux dimensions. Chaque mesure obtenue à l'étape 104 est convertie en valeurs de rayons Ri relativement à ce premier centre fictif Oi. On mesure à cette première itération une différence de chaque valeur de rayons Ri et à celle du rayon attendu R. Les itérations vont chercher à minimiser ces différences. La méthode des moindres carrés peut être utilisée de manière itérative jusqu'à ce qu'un centre virtuel Cv soit déterminé par une fonction d'optimisation minimisant les écarts entre les différents rayons intérieurs mesurés et un rayon intérieur moyen spécifié, ce rayon intérieur moyen spécifié correspondant à une section sensiblement circulaire attendue de l'extrémité concernée. Le centre virtuel Cv peut correspondre à un centre obtenu après plusieurs itérations, et correspondant à l'itération donnant le moins d'écart entre les différents rayons intérieurs recalculés relativement à ce centre virtuel Cv. Dans l'invention, on définit un seuil d'écart maximal entre les rayons recalculés de 0,05 mm à partir duquel l'itération est stoppée. En deçà de ce seuil, le centre fictif considéré est suffisamment précis pour constituer un centre virtuel pour les besoins de l'invention.

Lorsque le centre virtuel est défini, on utilise les données de ce nouveau centre pour obtenir les fonctions recentrées $g_{RiTnA}$ et $g_{ReTnA}$ représentant toutes les nouvelles valeurs de rayons recentrés.

Un tube $T_n$ comporte deux extrémités respectivement A et B, et pour chacune on peut définir un centre virtuel spécifique. Côté extrémité A, un centre virtuel $Cv_{TnA}$, et côté extrémité B, un centre virtuel $Cv_{TnB}$. Le tube Tn comporte un axe d'allongement principal. Les points $Cv_{TnA}$ et $Cv_{TnB}$ ne sont pas nécessairement alignés sur cet axe, étant données les tolérances de fabrication des tubes, notamment ceux destinés à former des line pipe.

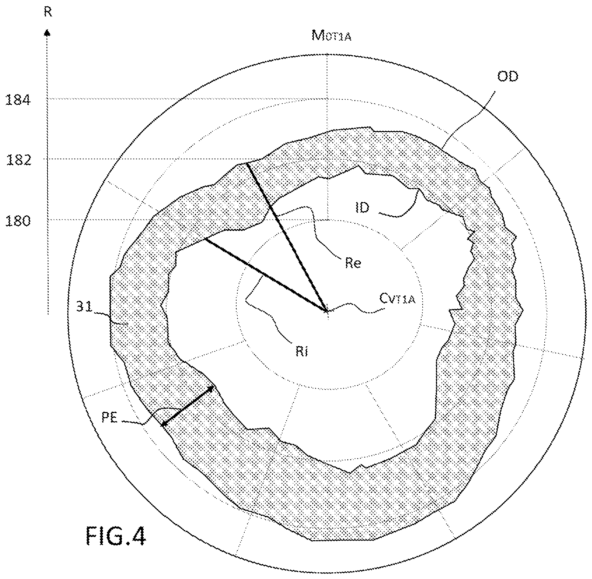

La figure 4 représente un exemple de géométrie d'une extrémité A d'un tube $T_1$. Cette représentation obtenue au cours de l'étape de traitement des données 106 permet de considérer les valeurs de rayon intérieur, du rayon extérieur et donc du profil d'épaisseur radiale sur toute la circonférence de cette extrémité. On comprend avec cette vue grossie que le rayon intérieur Ri peut varier tout au long de la circonférence au sein d'une marge de tolérance comprise entre 180 cm et 182.5 cm, et que le rayon extérieur Re varie entre 183 et 185 cm.

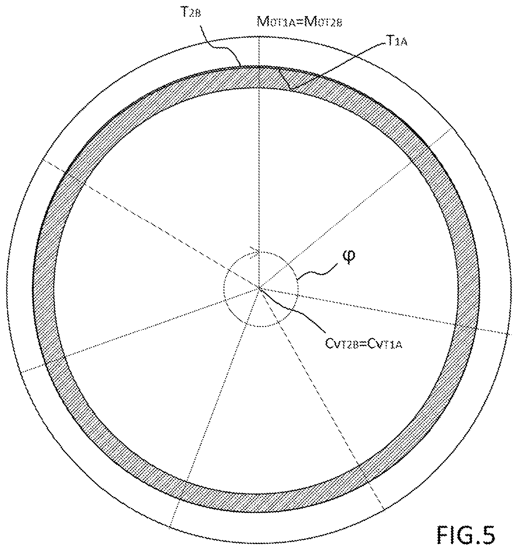

Lorsque les rayons sont représentés à l'échelle des tubes, où deux profils d'extrémité sont superposés figure 5, il semble qu'il y ait peu d'écart entre profils de deux extrémités de tubes, les micro-variations observées à la Figure 4 peuvent néanmoins avoir des conséquences importantes au moment du soudage, et risquent de conduire à des soudures non conformes.

Il existe donc un besoin pour produire un indice de compatibilité angulaire entre les extrémités de tubes présentées en vis-à-vis.

Le procédé selon l'invention produit entre autres, à l'étape de traitement des données 106, un indice de compatibilité angulaire $IND_{thêtak}$ ayant pour objectif de mieux anticiper la compatibilité des tubes à assembler lors de l'étape de soudage, et ainsi à améliorer la qualité des joints réalisés pour une mise en œuvre sur un site d'installation 109.

Selon différentes mises en œuvre du procédé de l'invention, l'indice de compatibilité angulaire $IND_{thêtak}$ généré peut être de différentes natures.

De préférence, cet indice de compatibilité angulaire $IND_{thêtak}$ est généré au cours d'une étape de traitement des données 106. Cette étape de traitement des données 106 peut être réalisées pendant une étape de transport 105 et/ou de stockage 107. Pour le traitement de données, on identifie un groupe de tubes. Ce groupe de tubes est déterminé après l'étape 103 de fabrication, et/ou finalisation et/ou réparation. Ce groupe de tubes comporte n tubes. Chaque tube ayant deux extrémités, le nombre de combinaisons possibles entre ces tubes est de 2*n*(n-1). Pour chacune des 2*n*(n-1) combinaisons d'assemblage, on détermine un indice de compatibilité $IND_{thêtak}$. Cet indice de compatibilité $IND_{thêtak}$ est bilatéral et relatif à respectivement deux extrémités précises situées respectivement sur deux tubes distincts. K est une variable représentant l'ensemble des combinaisons entre extrémités de tubes d'un groupe de tube considéré.

Pour un groupe de 100 tubes, cela représente 19 800 combinaisons possibles. Enfin, même en considérant une paire donnée de deux tubes, pour laquelle on cherche à déterminer un indice de compatibilité $IND_{thêtak}$ où k représente une paire spécifique par exemple celle de l'extrémité A du tube T1 avec l'extrémité B du tube T2, auquel cas k = T1AT2B, il existe encore une multitude de manière de présenter angulairement ces deux extrémités de tube l'une par rapport à l'autre. Un angle $\Theta$ représente l'écart angulaire entre les références angulaires respectives des extrémités des deux tubes.

Par exemple, l'indice de compatibilité $IND_{thêtak}$ sera calculé à partir des données de rayons intérieurs donnés par les fonctions recentrées $g_{RiT1A}$ et $g_{RiT2B}$ préalablement établies. L'indice $IND_{thêtak}$ pourra alors être calculé comme suit, pour une valeur $\Theta$, thêta, donnée d'écart entre les références angulaires $M_{0T1A}$ et $M_{0T2B}$, afin de déterminer l'écart maximal observé sur toute la circonférence des tubes, entre les rayons intérieurs présentés en regard, lorsque l'extrémité A d'un tube T1 est présentée en regard de l'extrémité B du tube T2. Les mesures ayant été toutes faites selon la même convention horaire de rotation par rapport au référentiel Mo, il est donc nécessaire d'inverser la lecture des données représentées à l'une des extrémités relativement à celle fournies par l'autre extrémité, et c'est la raison pour laquelle à chaque valeur $\varphi$, phi, lue sur l'une des fonctions $g_{RiT1A}$ on considère la valeur à (360°- $\varphi$), 360-phi, de la fonction $g_{RiT2B}$. On comprend dans la présente description que la considération d'un couple de tubes est indépendante d'une permutation de l'un ou de l'autre des tubes considérés dans l'algorithme de traitement :

$$IND\Theta k = INDi\Theta k = Max |gRiT1A(\varphi) - gRiT2B(360 - \varphi + \Theta)| \; tel \; que \; \varphi \; E \; [1 ; 360°]$$

En variante, cet indicateur $IND_{thêtak}$ pourra mesurer les différences de rayons extérieurs et auquel cas l'indice se lira alternativement comme suit INDΘk = INDeΘk = Max |gReT1A($\varphi$) - gReT2B(360 - $\varphi$ + Θ)| *tel que* $\varphi$ E [1 ; 360°]

En variante, cet indicateur $IND_{th\hat{e}tak}$ pourra mesurer les différences de profil d'épaisseur, un profil d'épaisseur PE étant la différence entre rayons extérieurs et rayons intérieurs pour tout angle de rotation $\varphi$, phi, lors de la prise des mesures, et auquel cas l'indice se lira alternativement comme suit

$$INDΘk = INDPEΘk$$
$$= Max |gReT1A(\varphi) - gRiT1A(\varphi) - (gReT2B(360 - \varphi + Θ)$$
$$- gReT2B(360 - \varphi + Θ))| \quad tel\ que\ \varphi \in [1 ; 360°]$$

On peut alors parler respectivement d'indice de compatibilité intérieur $INDi_{th\hat{e}tak}$, d'indice de compatibilité extérieur $INDe_{th\hat{e}tak}$ ou encore d'indice de compatibilité de profil d'épaisseur $IND_{PEth\hat{e}tak}$. Cet indice de compatibilité $IND_{th\hat{e}tak}$ en représentant le maximum d'une valeur absolue définit ainsi la pire valeur qui puisse être observée entre les deux tubes.

L'indice de compatibilité $IND_{th\hat{e}tak}$ va ensuite être calculé pour plusieurs valeurs de cet écart angulaire Θ, thêta, entre les marques de référence M0 de chacun des deux tubes. Par exemple, si on prend un incrément et une précision de position au degré près entre les deux extrémités des deux tubes, cela donne 360 valeurs pour l'écart angulaire Θ, thêta. Cet indice de compatibilité va passer par un minimum $minIND_{th\hat{e}tak}$ et un maximum $maxIND_{th\hat{e}tak}$.

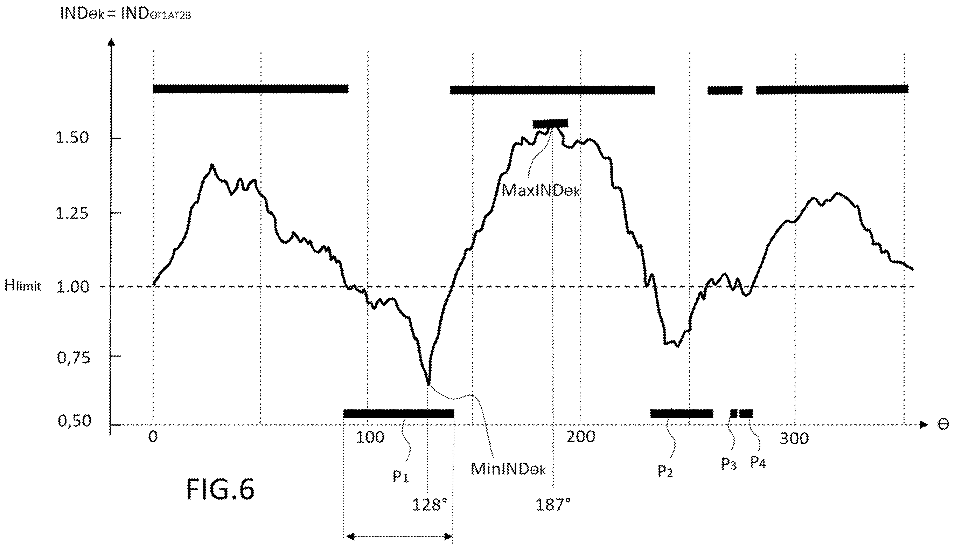

La figure 6 représente une vue graphique des valeurs de cet indice de compatibilité $IND_{th\hat{e}tak}$ pour plusieurs valeurs d'écart angulaire Θ, thêta, compris entre 0 et 360°. La figure 6 représente un cas où le tube $T_{1A}$ est compatible avec le tube $T_{2B}$ sous réserve d'une rotation angulaire. En effet, comme cela est observé il existe de nombreuses positions angulaires où l'indice de compatibilité $IND_{ΘT1AT2B}$, également noté $IND_{th\hat{e}taT1AT2B}$, est supérieur au seuil $H_{limit}$.

Une note globale de compatibilité $H_{T1AT2B}$ va être donnée à une paire « k » donnée T1AT2B. Par exemple cette note globale $H_k$ peut prendre une note discrète parmi un nombre fini de notes. Dans l'exemple ci-dessous, la note globale $H_k$ peut prendre 3 notes :

- compatible
- compatible sous réserve de présentation angulaire contrôlée
- non compatible

Cette note globale $H_k$ va être déterminée en fonction des valeurs de l'indice de compatibilité $IND_{th\hat{e}tak}$ calculé pour différentes valeurs de Θ, thêta. Cette note globale Hk peut être donnée sur la base de l'un ou plusieurs des indicateurs de compatibilité intérieur $INDi_{th\hat{e}tak}$, d'indice de compatibilité extérieur $INDe_{th\hat{e}tak}$ et ou d'indice de compatibilité de profil d'épaisseur $IND_{PEth\hat{e}tak}$.

Par exemple, la note globale $H_k$ peut être donnée en fonction du seul indice de compatibilité intérieur $INDi_{th\hat{e}tak}$.

Si quelle que soit la valeur de l'écart angulaire Θ, thêta, l'indice de compatibilité $IND_{th\hat{e}tak}$ présente une valeur inférieure à un seuil $H_{limit}$, alors la paire considérée sera considérée comme 100% compatible quelle que soit la manière dont ces deux extrémités vont être angulairement présentées l'une vis-à-vis de l'autre au moment des étapes de soudage. Le seuil $H_{limil}$ peut être appelé seuil de HiLo. Il ne sera donc pas nécessaire de réaliser un positionnement angulaire de ces deux extrémités l'une vis-à-vis de l'autre avant l'étape de soudage 108.

Si pour certaines valeurs de l'écart angulaire Θ, thêta, l'indice de compatibilité $IND_{th\hat{e}tak}$ présente une valeur supérieure audit seuil $H_{limit}$, on va alors considérer la taille des plages angulaires de la valeur Θ, thêta, pour lesquelles l'indice de compatibilité $IND_{th\hat{e}tak}$ présente une valeur inférieure audit seuil $H_{limit}$. En effet, pour cette paire il peut exister une ou plusieurs plages de l'écart angulaire Θ, thêta, pour lesquelles l'indice de compatibilité $IND_{th\hat{e}tak}$ présente une valeur inférieure à un seuil $H_{limit}$.

Dans l'exemple de la Figure 6, il existe 4 plages angulaires respectivement P1, P2, P3 et P4 pour lesquelles l'extrémité A du tube T1 est compatible avec l'extrémité B du tube T2. Les autres valeurs d'orientation ne permettent pas de faire respecter la valeur de spécification HiLo. En particulier les quatre plages angulaires couvrent les secteurs angulaires de l'angle $\varphi$, phi, de 90° à 130°, de 230° à 260°, de 270° à 275° et de 280° à 290° pour lesquelles l'assemblage des deux tubes $T_1$, $T_2$ respecterait la spécification de HiLo. Le diagramme de la figure 6 permet directement d'apprécier sur l'axe des ordonnées le seuil $H_{limit}$ désignant la spécification de HiLo. Sur la Figure 6, le minimum $minIND_{th\hat{e}tak}$ est observé à 128° et le maximum $maxIND_{th\hat{e}tak}$ est observé à 187°.

On considère ensuite la plus grande plage de cet écart angulaire Θ, thêta, remplissant la condition ci-dessus. Si cette plus grande plage est supérieure à une taille de plage seuil S, alors la paire sera considérée comme compatible sous réserve de présentation angulaire contrôlée.

En particulier, dans l'exemple de la Figure 6, l'ampleur angulaire de la plage P1 est la plage de plus grande ampleur parmi les 4 plages P1 à P4. De plus, cette plage P1 est supérieure à la plage seuil S. Par exemple, une valeur de plage seuil est de 30°. Donc cette paire d'extrémité T1A-T2B est considérée comme compatible sous réserve de présentation angulaire contrôlée.

En revanche si cette plus grande plage est inférieure à une taille de plage seuil S, alors la paire sera considérée comme non compatible.

Une paire sera également considérée comme non compatible, si quel que soit l'écart angulaire $\Theta$, thêta, considéré, l'indice de compatibilité $IND_{thêtak}$ présente une valeur supérieure audit seuil de HiLo $H_{limit}$.

Les notes attribuées aux paires sont fonction des valeurs choisies pour les critères de seuil de HiLo $H_{limit}$ et de plage seuil S.

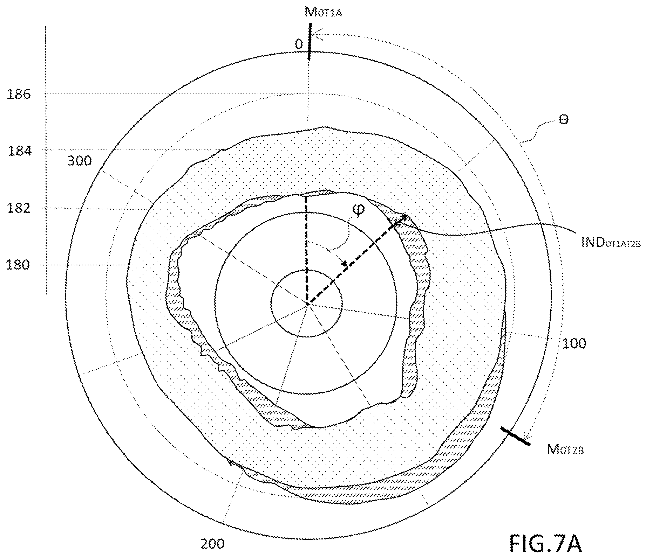

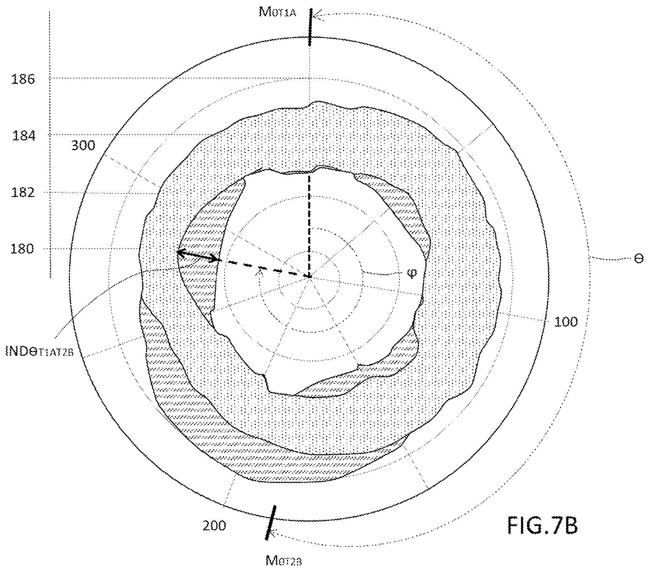

La figure 6 permet de localiser la position angulaire optimale entre les références angulaires $M_{0T1A}$ et $M_{0T2B}$ pour laquelle l'indice de compatibilité $IND_{thêtaT1AT2B}$ atteint un minimum. En l'occurrence pour l'écart angulaire de 128°, dans l'exemple de la Figure 6. La figure 7A est une représentation selon une présentation de ces extrémités selon cet écart angulaire $\Theta$, thêta, optimal. La configuration de la figure 7B représente le cas d'étude de la figure 6 pour lequel l'indice de compatibilité $IND_{thêtaT1AT2B}$ atteint un maximum, à savoir pour une valeur d'écart angulaire $\Theta$, thêta, de 187°. A la figure 7A, on observe que l'indice de compatibilité $IND_{thêtaT1AT2B}$ visant un maximum de différence de rayon intérieur a été mesuré pour une valeur de l'angle $\varphi$, phi, relativement à la référence angulaire $M_{0T1A}$ de 50°. A la figure 7B, on observe que l'indice de compatibilité $IND_{thêtaT1AT2B}$ a été mesuré pour une valeur de l'angle $\varphi$, phi, relativement à la référence angulaire $M_{0T1A}$ de 280°.

Les seuils de HiLo $H_{limit}$ et la taille de la plage seuil S influencent les 2*n*(n-1) notes du groupe de n tubes. Le procédé selon l'invention est itéré afin de noter toutes les combinaisons possibles de paires de tubes. L'objectif de l'étape de traitement de données 106 est de noter chacune des paires statistiquement possibles. Cette notation est réalisée par traitement matriciel de l'ensemble des données.

Juste avant que l'étape de soudage 108 ne commence, l'opérateur en ligne qui a un tube fixe $T_{fixe}$ qui vient d'être ajouté à une tubulure considère le premier tube mobile $T_{1mobile}$ de son stock qu'il va pouvoir amener en regard du tube fixe $T_{fixe}$. Avant d'autoriser l'introduction de ce premier tube mobile $T_{1mobile}$ dans la ligne de production et de soudage, l'opérateur va lire les supports d'information des extrémités qui sont destinées à être placées en regard. Pour lire les supports d'information I, l'opérateur dispose d'un terminal électronique, par exemple tel qu'une tablette, un smartphone ou un ordinateur de type PC. Avantageusement ce terminal est sans fil. De manière à faciliter la lecture des données contenues dans le support d'information, une optique est incluse dans ce terminal afin de permettre de scanner le support d'information.

L'opérateur va ensuite soumettre ces informations à un système d'exploitation. En pratique, le terminal est capable, selon un exemple, d'établir une connexion vers ledit serveur d'exploitation distant de manière à générer une requête vers une base de données dudit système d'exploitation pour obtenir les informations spécifiques relatives à la paire spécifique scannée, dans l'exemple Tfixe-T1mobile. Selon un autre mode de réalisation, le terminal comprend une mémoire dans laquelle les données sont enregistrées localement. Cette mémoire peut être amovible du terminal.

Cette base de données contient les données associées à toutes les paires possibles entre les extrémités de ce groupe de tubes. Les informations transmises dans le terminal comporteront notamment les indications si cette paire Tfixe-T1mobile est

- compatible ou « c » ou
- compatible sous réserve de présentation angulaire contrôlée ou « cc », ou encore,
- non compatible ou « nc ».

En effet, le système d'exploitation mis à disposition de l'opérateur contient toutes les notes obtenues par chacune des extrémités de tubes, ainsi que les plages angulaires de compatibilité de chacune de ces extrémités avec l'ensemble des autres extrémités du groupe de tube.

Si le premier tube $T_{1mobile}$ est compatible, l'opérateur va l'envoyer tel quel dans l'étape de soudage 108.

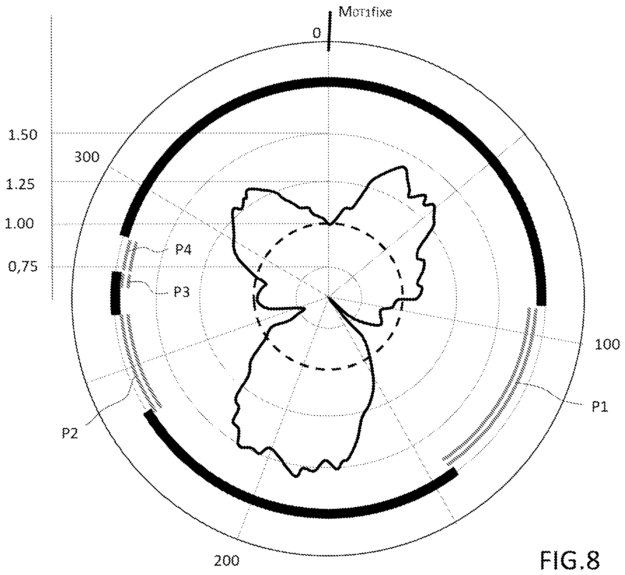

Si le premier tube $T_{1mobile}$ est indiqué compatible sous réserve de présentation angulaire contrôlée, l'opérateur pourra également consulter via le terminal des indications de positions permettant une compatibilité, ces indications concernant les positions compatibles sont également dans la mémoire. En particulier, le système d'exploitation pourra lui indiquer les positions angulaires spécifiques qui permettent un assemblage conforme. Les plages angulaires seront par exemple communiquées par le système d'exploitation, ou la mémoire locale, relativement au référentiel de la référence angulaire $M_{0T1mobile}$ de ce tube $T_{1mobile}$, selon une convention d'orientation. La figure 8 est un mode de représentation des plages angulaires conformes qui peut être fourni par le terminal électronique.

L'opérateur pourra par exemple reporter un marquage visuel à la surface du tube $T_{1mobile}$ pour localiser ces plages qui peuvent être mises en regard de la référence angulaire $M_{0T1fixe}$ du tube $T_{fixe}$. Selon un mode de réalisation de l'invention, le procédé comporte une étape de marquage des zones admissibles, représentées Za à la figure 2, sur le tube mobile à envoyer vers l'étape de soudage 108, ces zones sont indiquées sur le tube lui-même et sont identifiées à partir de la référence $M_0$ du tube mobile. Pour faciliter ce marquage, le terminal peut convertir les zones angulaires admissibles en indiquant des distances en mm des bordures de ces zones relativement à la référence angulaire $M_{0Tmobile}$. Ensuite, à l'aide de règles magnétiques souples placées à l'extérieur du tube, l'opérateur peut reporter de manière précise les limites et la localisation de l'arc angulaire de la zone admissible Za. Alternativement ou en complément, le terminal électronique peut être disposé dans un support à l'intérieur du tube mobile, et comporter un affichage pour y proposer la représentation de la Figure 8. Le terminal peut alors être configuré pour permettre à un opérateur de modifier l'emplacement de la référence $M_0$ du tube mobile au niveau de l'affichage, et obtenir un nouvel affichage actualisant la position horaire de la Figure 8 et permettant ainsi une localisation homothétique de visu des zones admissibles.

De manière analogue, il est possible de marquer sur le tube $T_{1mobile}$ les seules configurations d'alignement où ce tube sera en position angulaire incompatible avec le tube $T_{fixe}$. Le choix des marquages peut se faire selon une logique de minimisation du marquage à réaliser.

En revanche, si le premier tube $T_{1mobile}$ est incompatible, l'opérateur va l'envoyer en quarantaine. L'opérateur réitérera les étapes ci-dessus avec le deuxième tube mobile $T_{2mobile}$ de son stock.

Si le deuxième tube $T_{2mobile}$ est compatible, il sera donc soudé au tube $T_{fixe}$. Le procédé selon l'invention sera réitéré, mais cette fois en considérant le tube nouvellement ajouté, à savoir le tube $T_{2mobile}$ comme étant le nouveau tube fixe $T_{fixe}$. En lisant les données de l'extrémité à souder du nouveau tube $T_{fixe}$, le système d'exploitation proposera d'abord à l'opérateur d'utiliser le ou les tubes mis en quarantaine si l'un de ces derniers avait une compatibilité totale ou au moins partielle avec la nouvelle extrémité à souder.

L'intérêt du procédé selon l'invention est de minimiser le nombre de tubes restant en quarantaine.

L'intérêt de l'invention est de permettre une optimisation de la gestion des stocks de tubes à souder. L'invention permet également de limiter les étapes de recherche de meilleure présentation angulaire des extrémités des tubes entre eux avant même qu'ils soient à l'entrée de la ligne de soudage 108.

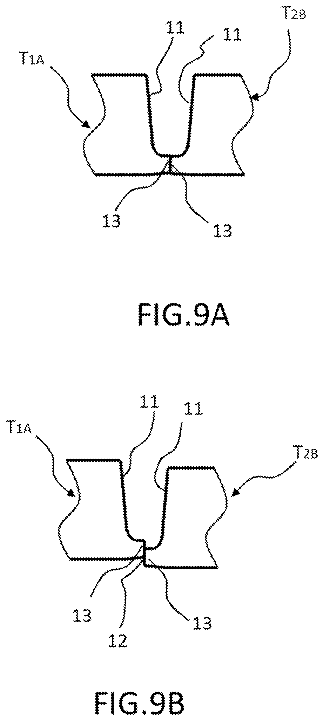

La figure 9A représente une valeur de HiLo évaluée au cours de l'étape de soudage 108. En effet, les bords 11, ou face transversale 11, de chaque tube de la figure 5A sont usinés de sorte qu'un chanfrein 13 a été réalisé au niveau de ces faces transversales 11. L'usinage d'un chanfrein 13 fait partie de l'une des étapes des opérations de soudage 108. A la figure 5A on observe des chanfreins 13 dont les rayons intérieurs sont alignés, il s'agit d'une position optimale en vue du soudage.

La figure 9B représente un cas similaire à la figure 9A représentant deux tubes $T_1$, $T_2$ pour lesquels une valeur 12 de Hilo non nulle est observée entre les deux chanfreins 13. Cette valeur 12 de Hilo est ici représenté par la différence entre les rayons intérieurs des deux tubes T1 et T2. Cette valeur 12 de HiLo entre chanfreins 13 peut être admissible si elle est inférieure à un seuil prédéfini. La figure 9B étant schématique, la valeur 12 de HiLo entre les chanfreins peut également être considérée comme insatisfaisante.

L'usinage de ces chanfreins 13 étant une étape de haute précision réalisée au cours de l'étape de soudage 108, il est important de ne pas avoir à réitérer cet usinage. L'intérêt de l'invention est de permettre d'anticiper les compatibilités et de faire en sorte que les extrémités présentées en vis-à-vis dans la ligne de soudage soient compatibles avec une très forte probabilité, si ce n'est avec une garantie totale. Les usinages réalisés seront alors à forte probabilité de compatibilité entre eux.

Une optimisation supplémentaire permise par l'invention consiste à répartir les tubes d'un groupe en sous-groupes de tubes afin de minimiser les cas de mise en quarantaine voire d'incompatibilité totale au sein d'un même sous-groupe.

Selon un mode particulier de l'invention, l'étape de traitement 106 peut également donner des indications de répartitions des tubes du groupe considéré selon plusieurs sous-groupes, afin de minimiser les incompatibilités d'assemblage entre les tubes d'un même sous-groupe. Sur le lieu de stockage 107, les sous-groupes peuvent être séparés les uns des autres. A cette fin, le procédé de l'invention peut être appliqué à un groupe de tubes pour optimiser leur répartition au sein de différents groupes destinés à être traités séparément. Une opération de transport 105 pourra être à nouveau nécessaire pour former ces groupes de tubes et les stocker isolément sur leur lieu de stockage 107. Les groupes ainsi générés permettent de réduire les incompatibilités de jonction entre tubes. En outre, les sous-groupes ainsi répartis permettent de réduire les mises en quarantaines des tubes lorsque ces tubes seront amenés à l'étape de soudage 108.

Au cours de l'étape 106, le procédé selon l'invention permet de générer une note globale de compatibilité $H_k$ spécifique à chacune des paires d'extrémités de tubes possibles au sein du groupe de tubes considéré.

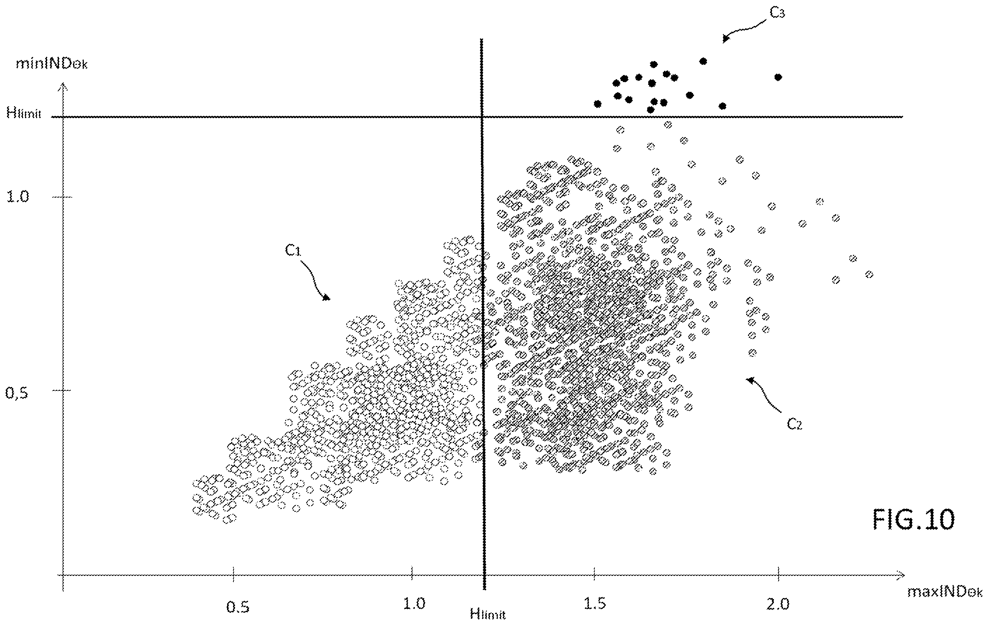

La figure 10 est une représentation des notes obtenues en termes de minimum d'indice de compatibilité $minIND_{th\hat{e}tak}$, en ordonnées et de maximum d'indice de compatibilité $maxIND_{th\hat{e}tak}$ en abscisses pour chacune des paires possibles au sein d'un groupe de tubes

- C1 désigne une classe de compatibilité regroupant les couples qui sont compatibles quelle que soit la rotation $\Theta$, thêta, effectuée entre les deux extrémités données dudit couple, en effet les paires identifiées dans le groupe C1 ont leur minimum $minIND_{th\hat{e}tak}$ et maximum $maxIND_{th\hat{e}tak}$ d'indice de compatibilité inférieur au seuil Hlimit.

■ $C_2$ désigne une classe de compatibilité regroupant les couples qui sont compatibles sous réserve de les présenter angulairement correctement vis-vis de l'autre ; et une rotation sera probablement nécessaire au moment de leur jointage. En effet, les paires du groupe C2 ont bien au moins leur minimum d'indice de compatibilité $minIND_{thêtak}$ toujours inférieur au seuil Hlimit, mais pour certain écart angulaire $\Theta$, thêta, le maximum d'indice de compatibilité $maxIND_{thêtak}$ sera supérieur au seuil,

■ $C_3$ désigne une classe de compatibilité regroupant les couples qui ne sont pas compatibles quelle que soit la rotation effectuée. En effet, ces paires n'ont aucun indice de compatibilité $IND_{thêtak}$ en dessous du seuil limite quelle que soit la valeur de $\Theta$, thêta.

La figure 10 représente la densité de répartition des couples de tubes 1 dans chacune des classes $C_1$, $C_2$ et $C_3$.

Une même extrémité d'un tube, en fonction des paires qu'elle peut être amenée à former avec les autres extrémités de tubes peut entrer dans l'une quelconque de ces 3 catégories.

Dans un groupe de 100 tubes, la statistique de compatibilité de chaque extrémité %Tn est donc construite avec les 198 notes globales de compatibilité $H_k$ obtenues en étudiant cette extrémité relativement aux extrémités des 99 tubes restant du groupe. L'intérêt de l'invention est de définir une statistique de compatibilité %Tn pour chaque extrémité relativement à l'ensemble des tubes de son groupe avant le début de l'étape de soudage 108. A titre d'exemple, l'extrémité A du tube $T_1$ peut avoir comme statistique de compatibilité %T1A avec les autres extrémités des autres tubes disponibles dans le groupe : {$C_1$, a% ; $C_2$, b% ; $C_3$, c%} tel que a+b+c = 100%.

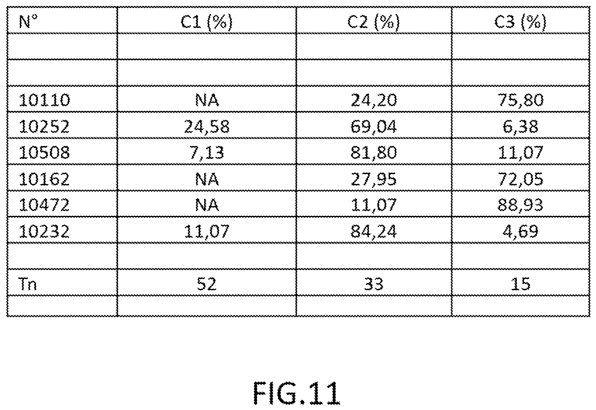

La figure 11 représente un tableau donnant la statistique de compatibilité %Tn indiquant les proportions C1, C2 et C3 de chaque extrémité de tube.

Alternativement le tableau peut être simplifié pour ne lister, pour chaque tube Tn, que l'extrémité de ce tube Tn présentant la statistique de compatibilité présentant le plus fort taux d'incompatibilité.

Par exemple, pour un tube T1 qui a ses extrémités A et B, si

%T1A est {$C_1$, 52% ; $C_2$, 33% ; $C_3$, 15%}
% T1B est {$C_1$, 27% ; $C_2$, 70% ; $C_3$, 13%}
Alors le tableau de la figure 11 indiquera
%T1 est {$C_1$, 52% ; $C_2$, 33% ; $C_3$, 15%}

Selon un autre mode de réalisation du tableau de la figure 11, comme pour chaque paire de tubes, chaque tube ayant deux extrémités, il existe 4 manières d'associer les deux tubes x et y entre eux, alors on attribuera à cette paire TxTy une note de faible compatibilité $N_{TxTy}$ correspondant à la plus faible des 4 notes Hk observées pour chacune des 4 possibilités d'assemblage des extrémités respectivement A et B de chacun des tubes x et y. La note non compatible « nc » est plus faible que la note « «cc » de compatibilité partielle, elle-même plus faible que la note de compatibilité « c ». Par exemple si $H_{TxATyA}$ =c ; $H_{TxATyB}$ =c $H_{TxBTyA}$ =cc et $H_{TxBTyB}$ =nc. Alors la paire $T_x T_y$ aura une note de faible compatibilité $N_{TxTy}$ égale a « nc ».

Selon cet autre mode de réalisation de l'invention, par exemple dans un groupe de 100 tubes, pour chaque tube Tn, on aura 99 notes de faible compatibilité N. De manière identique à la Figure 11, on pourra identifier le taux de proportions C1, C2 et C3 de chaque tube, sur la base de ses notes de faible compatibilité, on obtiendra alors une statistique de faible compatibilité %Ntn pour chaque tube Tn : {$C_1$, e% ; $C_2$, f% ; $C_3$, g%} tel que e+f+g = 100%.

Ce tableau de la Figure 11 permet d'identifier les tubes dont la statistique de compatibilité %Tn, et ou la statistique de faible compatibilité %Ntn a une valeur dans sa composante C3 au-delà d'un seuil critique de compatibilité, par exemple 60%, voire plus exigeant supérieur à 50%, et de manière encore plus exigeante supérieure à 40%. Les tubes non identifiés forment le groupe G0 des tubes globalement compatibles.

Par exemple, si dans un groupe de 100 tubes, un nombre « d » de tubes a une composante C3 de sa statistique de compatibilité %Tn ou de la statistique de faible compatibilité %Ntn au-delà d'un seuil critique de compatibilité, le groupe G0 aura 100 - d tubes. Les « d » tubes vont être isolés.

Les « d » tubes pourront être interdits d'introduction dans la ligne de soudage 108, et destinés à des tests ou des essais parallèles à la ligne de soudage 108.

Alternativement, en utilisant un algorithme des graphes fully connectés (fully connected graphes en anglais), notamment disponibles sous MATLAB ou autre logiciel de programmation mathématique, et en déterminant une taille de partition du groupe, par exemple une partition en deux groupes, on va lancer l'algorithme pour qu'il identifie parmi ces « d » tubes ceux qui seront dans un premier sous groupe G1, et ceux qui seront dans un deuxième sous groupe G2.

Ensuite, il sera effectué deux lots, car il a été choisi une partition en 2, et avec dans le premier lot la moitié des tubes du groupe G0 et les tubes du sous groupe G1, et dans le deuxième lot l'autre moitié des tubes du groupe G0 et les tubes du deuxième sous groupe G2.

Cette partition en deux lots permettra de limiter les risques d'incompatibilité entre tubes et les délais de quarantaine, l'invention permet de répartir les tubes ayant une forte probabilité d'incompatibilité, reflétée par la composante en C3 dans leur statistique %Tn ou %NTn, dans chacun des lots. Les lots seront introduits l'un après l'autre dans la ligne de production et soudage 108. Cette opération permet d'optimiser les temps de traitement d'assemblage de tubes entre eux.

Selon un mode de réalisation, le procédé de l'invention permet de générer un marquage de compatibilité $M_C$, Figure 2, d'un tube. Un tel marquage peut selon un mode de réalisation être un marquage colorimétrique $M_c$ Selon un mode de réalisation, le marquage de compatibilité $M_C$ d'un tube est calculé sa répartition statistique dans les classes $C_1$, $C_2$ ou $C_3$. Ainsi un utilisateur est capable de reconnaitre sur site des tubes pouvant présenter une statistique de coopération maximale. Ainsi, selon un mode de réalisation, la classe $C_1$ est associée à une pastille de couleur verte apposée à la surface d'un tube présentant une statistique relative à cette classe supérieure à un seuil prédéfini. De la même manière, un tube peut comprendre une pastille de couleur orange lorsque sa statistique relative à l'appartenance à cette classe $C_2$ est supérieure à un autre seuil et enfin un tube peut comprendre une pastille rouge lorsque sa statistique d'appartenance à la classe $C_3$ est supérieure à un troisième seuil.

Dans un cas particulier, seuls les « d » tubes isolés seront marqués en rouge.

Selon une alternative, une pastille comportant une indication colorimétrique complexe peut représenter la statistique d'appartenance à chaque classe d'un tube.

## Revendications

1. Procédé de génération d'un indice de compatibilité entre deux extrémités de deux tubes notamment avant des opérations de soudage, ledit procédé comportant les étapes de :

   (a) marquage d'une référence angulaire ($M_0$) sur chacune des deux extrémités ;
   (b) mesure orbitale d'une caractéristique relative au profil de chacune des extrémités ;
   (c) détermination d'un indice de compatibilité angulaire ($IND_{thêtak}$) entre les deux extrémités pour un écart angulaire ($\Theta$, thêta) entre les références angulaires desdites extrémités, cet indice de compatibilité angulaire dérivant d'un maximum de différence entre les mesures orbitales, ce maximum étant recherché pour des emplacements du profil mis en regard,
   (d) itération de la détermination de l'indice de compatibilité angulaire pour plusieurs valeurs d'écart angulaire entre les références angulaires desdites extrémités ;
   (e) génération d'une note globale de compatibilité ($Hk$) entre ces deux extrémités, la note globale de compatibilité étant fonction des indices de compatibilité angulaire déterminés pour plusieurs valeurs d'écart angulaire, ladite note globale de compatibilité ($Hk$) entre deux extrémités prenant une note discrète parmi :

   - compatible (c), ou ;
   - compatible sous réserve de présentation angulaire contrôlée (cc), ou encore ;
   - non compatible (nc).

2. Procédé de génération d'un indice de compatibilité selon la revendication 1, **caractérisé en ce que** la mesure orbitale d'une caractéristique relative au profil est une mesure de rayon.

3. Procédé de génération d'un indice de compatibilité selon la revendication 2, **caractérisé en ce que** la mesure orbitale est une mesure de rayon déterminée relativement à un centre virtuel (Cv) pour lequel les différences de rayon sont minimum.

4. Procédé de génération d'un indice de compatibilité selon l'une des revendications 2 ou 3, **caractérisé en ce que** la mesure de rayon est une mesure de rayon intérieur, et **en ce qu'**un centre virtuel est déterminé en fonction des rayons intérieurs.

5. Procédé de génération d'un indice de compatibilité selon l'une des revendications 2 ou 3, **caractérisé en ce que** la mesure de rayon est une mesure de rayon extérieur.

6. Procédé de génération d'un indice de compatibilité selon la revendication précédente, **caractérisé en ce que** la mesure orbitale est une mesure de rayon extérieur déterminée relativement à un centre virtuel (Cv) pour lequel des différences entre des rayons intérieurs sont minimum.

7. Procédé de génération d'un indice de compatibilité selon l'une des revendications précédentes, **caractérisé en ce que** la mesure orbitale est effectuée selon une même convention horaire relativement à la référence angulaire, de telle sorte que, pour un écart angulaire ($\Theta$, thêta) donné entre les références angulaires des deux tubes, on itère, pour chaque angle de mesure ($\varphi$, phi), le calcul de différence entre la valeur de la mesure orbitale à cet angle de mesure sur un premier tube et la valeur de la mesure orbitale observée sur le deuxième tube à un angle inversé de cet angle de mesure, cet angle inversé (360° - $\varphi$ ; 360-phi) correspondant à 360° minoré de la valeur de l'angle de mesure ($\varphi$, phi) de telle sorte qu'à l'issue des itérations, l'itération pour laquelle la différence de mesures orbitales des deux extrémités mises en regard est maximale est identifiée, ainsi que la valeur de cette différence maximale correspondant au maximum de différence entre les mesures orbitales pour cet écart angulaire ($\Theta$, thêta).

8. Procédé de génération d'un indice de compatibilité selon l'une des revendications précédentes, **caractérisé en ce que** l'étape (d) est réalisée pour des valeurs d'écart angulaire augmentant successivement d'un pas de moins de 5° et de préférence avec un pas de 1° entre chaque écart angulaire.

9. Procédé de génération d'un indice de compatibilité selon l'une des revendications précédentes, **caractérisé en ce que** la note globale de compatibilité (Hk) dépend d'un seuil de HiLo (Hlimit) défini comme seuil de tolérance maximum pour l'ensemble des indices de compatibilité angulaire ($IND_{thêtak}$) entre les deux extrémités déterminées pour chaque écart angulaire ($\Theta$, thêta).

10. Procédé de génération d'un indice de compatibilité selon la revendication précédente, **caractérisé en ce que** la note globale de compatibilité (Hk) dépend d'une taille angulaire de plage seuil (S) pour laquelle il existe un groupe continu de valeur d'écart angulaire ($\Theta$, thêta) où les indices de compatibilité angulaire ($IND_{thêtak}$) sont inférieurs au seuil de HiLo (Hlimit).

11. Procédé de génération d'un indice de compatibilité selon les revendications 9 et 10, **caractérisé en ce que** lorsque la note globale de compatibilité (Hk) entre deux extrémités prend la note discrète « compatible (c) », alors tous les indices de compatibilité angulaire ($IND_{thêtak}$) mesurés pour chacun des écarts angulaires, sont inférieurs au seuil de HiLo (Hlimit), et **en ce que** lorsque la note globale de compatibilité (Hk) entre deux extrémités prend la note discrète « compatible sous réserve de présentation angulaire contrôlée (cc) », il existe au moins une plage (P1) dont la taille angulaire est supérieure à la plage seuil (S).

12. Procédé selon la revendication 10 ou 11 **caractérisé en ce qu'**un groupe continu est un groupe de valeurs d'écarts angulaires ($\Theta$, thêta) successivement considérés à l'étape (d).

13. Procédé selon l'une des revendications 9 à 12, **caractérisée en ce que** lorsque la note globale de compatibilité (Hk) entre deux extrémités prend la note discrète « compatible sous réserve de présentation angulaire contrôlée (cc) », le procédé comprend une étape (f) de marquage d'une zone admissible (Za) sur l'une des deux extrémités pour localiser angulairement, relativement au marquage angulaire ($M_0$), une plage (P1) dont la taille angulaire est supérieure à la plage seuil et où il existe un groupe continu de valeurs d'écart angulaire ($\Theta$, thêta) où les indices de compatibilité angulaire ($IND_{thêtak}$) sont inférieurs au seuil de HiLo (Hlimit).

14. Procédé de génération d'une statistique de compatibilité ($\%Tn$, $\%N_{Tn}$) dans un groupe de n tubes pour lesquels une note globale de compatibilité a été déterminée selon le procédé des revendications 1 à 13 pour chacune des paires d'extrémités possibles du groupe de tubes, tel que pour chaque extrémité on définit

   - sa proportion (a, e) de compatibilité « C1 » avec l'ensemble des extrémités des autres tubes
   - sa proportion (b, f) de compatibilité partielle « C2 » avec l'ensemble des extrémités des autres tubes sous réserve d'une présentation angulaire contrôlée entre les extrémités, et
   - sa proportion (c, g) de non-compatibilité « C3 » avec l'ensemble des extrémités des autres tubes,

   ces trois proportions faisant 100%.

15. Procédé de génération d'une statistique de compatibilité selon la revendication précédente, **caractérisé en ce que** chaque tube (Tn) a pour statistique de compatibilité ($\%Tn$) les proportions obtenues par l'une de ses deux extrémités présentant la plus haute proportion de non-compatibilité.

16. Procédé de partition d'un groupe de n tubes **caractérisé en ce que** les tubes sont répartis en au moins deux lots en fonction des statistiques de compatibilité de chacun des tubes déterminées selon le procédé des revendications 14 ou 15, tel que chaque lot comporte un nombre équivalent de tubes ayant une proportion de non-compatibilité C3 inférieure à un seuil de compatibilité.

**17.** Procédé de partition d'un groupe de n tubes selon la revendication précédente **caractérisé en ce qu'**il comporte une étape de marquage des tubes au cours de laquelle un marquage de compatibilité (Mc) est inscrit sur au moins certain tubes, le marquage (Mc) comportant une information générée à partir du procédé de partition de la revendication 16, en particulier, le marquage permet d'identifier les tubes ayant une proportion de non-compatibilité C3 supérieure audit seuil de compatibilité.

**18.** Terminal électronique comportant une interface de lecture d'un identifiant d'un tube, une interface pour recevoir des données de mesure orbitale d'une caractéristique relative au profil d'une extrémité de ce tube; un calculateur pour transformer les mesures orbitales en fonction d'un centre virtuel de ladite extrémité, ledit calculateur étant configuré pour générer une note globale de compatibilité d'un couple de tubes à partir du procédé de l'une quelconque des revendications 1 à 13.

**19.** Ensemble composé d'un terminal électronique selon la revendication 18 et d'un groupe de n tubes comportant chacun un marquage angulaire ($M_0$) à chacune de leurs extrémités distales, chaque extrémité distale de chaque tube comportant 2*(n-1) notes globales de compatibilité (Hk) avec chacune des extrémités distales des (n-1) autres tubes du groupe, ces notes globales de compatibilité étant obtenues par la mise en œuvre du procédé selon l'une quelconque des revendications 1 à 13, les notes globales de compatibilités de chacune des extrémités de tube avec les extrémités des autres tubes du groupe étant mémorisées dans le terminal électronique.

**20.** Ensemble selon la revendication 19 **caractérisé en ce que** la localisation angulaire, relativement au marquage angulaire ($M_0$), de plage dont la taille angulaire est supérieure à la plage seuil, et où il existe un groupe continu de valeurs d'écart angulaire ($\Theta$, thêta) où les indices de compatibilité angulaire ($IND_{thêtak}$) sont inférieurs au seuil de HiLo (Hlimit), tel qu'obtenu à la revendication 13 est mémorisé dans le terminal électronique pour chacune des 2*n*(n-1) combinaisons possibles entre ces n tubes.

**21.** Produit programme d'ordinateur comportant un calculateur et une mémoire pour la mise en œuvre des étapes du procédé de génération d'un indice de compatibilité selon l'une quelconque des revendications 1 à 13, et ou pour la mise en œuvre des étapes du procédé de génération d'une statistique de compatibilité selon l'une des revendications 14 ou 15.

**Patentansprüche**

**1.** Verfahren zum Erzeugen eines Kompatibilitätsindex zwischen zwei Enden zweier Rohre, insbesondere vor Schweißvorgängen, wobei das Verfahren die folgenden Schritte aufweist:

(a) Markieren einer Winkelreferenz ($M_0$) an jedem der beiden Enden;
(b) orbitales Messen eines Merkmals, das sich auf das Profil jedes der Enden bezieht;
(c) Bestimmen eines Winkelkompatibilitätsindex ($IND_{thêtak}$) zwischen den beiden Enden für eine Winkelabwei-chung ($\Theta$, theta) zwischen den Winkelreferenzen der Enden, wobei dieser Winkelkompatibilitätsindex von einem Maximum der Differenz zwischen den Orbitalmessungen abgeleitet ist, wobei dieses Maximum für einander gegenüberliegende Stellen des Profils gesucht wird;
(d) Iterieren des Bestimmens des Winkelkompatibilitätsindex für mehrere Werte der Winkelabweichung zwischen den Winkelreferenzen der Enden;
(e) Erzeugen eines globalen Kompatibilitätsvermerks (Hk) zwischen diesen beiden Enden, wobei der globale Kompatibilitätsvermerk eine Funktion der Winkelkompatibilitätsindizes ist, die für mehrere Werte der Winkelabweichung bestimmt wurden, wobei der globale Kompatibilitätsvermerk (Hk) zwischen zwei Enden einen diskreten Vermerk annimmt unter:

- kompatibel (c) oder
- kompatibel vorbehaltlich einer kontrollierten Winkelpräsentation (cc) oder
- nicht kompatibel (nc).

**2.** Verfahren zum Erzeugen eines Kompatibilitätsindex nach Anspruch 1, **dadurch gekennzeichnet, dass** die Orbitalmessung eines profilbezogenen Merkmals eine Radiusmessung ist.

**3.** Verfahren zum Erzeugen eines Kompatibilitätsindex nach Anspruch 2, **dadurch gekennzeichnet, dass** die Orbitalmessung eine Radiusmessung ist, die relativ zu einem virtuellen Zentrum (Cv) bestimmt wird, für das die Radiusdifferenzen minimal sind.

4. Verfahren zum Erzeugen eines Kompatibilitätsindex nach einem der Ansprüche 2 oder 3, **dadurch gekennzeichnet, dass** die Radiusmessung eine Innenradiusmessung ist und dass ein virtueller Mittelpunkt in Abhängigkeit von den Innenradien bestimmt wird.

5. Verfahren zum Erzeugen eines Kompatibilitätsindex nach einem der Ansprüche 2 oder 3, **dadurch gekennzeichnet, dass** die Radiusmessung eine Außenradiusmessung ist.

6. Verfahren zum Erzeugen eines Kompatibilitätsindex nach dem vorhergehenden Anspruch, **dadurch gekennzeichnet, dass** die Orbitalmessung eine Außenradiusmessung ist, die relativ zu einem virtuellen Zentrum (CV) bestimmt wird, für das die Innenradiusdifferenzen minimal sind.

7. Verfahren zum Erzeugen eines Kompatibilitätsindex nach einem der vorhergehenden Ansprüche, **dadurch gekennzeichnet, dass** die Orbitalmessung nach einer gleichen Zeitkonvention relativ zur Winkelreferenz durchgeführt wird, so dass für eine gegebene Winkelabweichung ($\Theta$, theta) zwischen den Winkelreferenzen der beiden Rohre für jeden Messwinkel ($\varphi$, phi) die Differenzberechnung zwischen dem Wert der Orbitalmessung bei diesem Messwinkel auf einem ersten Rohr und dem Wert der beobachteten Orbitalmessung auf dem zweiten Rohr bei einem umgekehrten Winkel dieses Messwinkels iteriert wird, wobei dieser umgekehrte Winkel ($360° - \varphi$; 360-phi) 360° entspricht, vermindert um den Wert des Messwinkels ($\varphi$, phi), so dass am Ende der Iterationen die Iteration identifiziert wird, bei der die Differenz der Orbitalmessungen der beiden gegenüberliegenden Enden maximal ist, sowie der Wert dieser maximalen Differenz, der der maximalen Differenz zwischen den Orbitalmessungen für diese Winkelabweichung entspricht ($\Theta$, theta).

8. Verfahren zum Erzeugen eines Kompatibilitätsindex nach einem der vorhergehenden Ansprüche, **dadurch gekennzeichnet, dass** Schritt (d) für Winkelabweichungswerte durchgeführt wird, die sukzessive um einen Schritt von weniger als 5° und vorzugsweise mit einem Schritt von 1° zwischen jeder Winkelabweichung ansteigen.

9. Verfahren zum Erzeugen eines Kompatibilitätsindex nach einem der vorhergehenden Ansprüche, **dadurch gekennzeichnet, dass** der globale Kompatibilitätsvermerk (Hk) von einer HiLo-Schwelle (Hlimit) abhängt, die als maximale Toleranzschwelle für die Gesamtheit der Winkelkompatibilitätsindizes ($IND_{th\hat{e}tak}$) zwischen den beiden für jede Winkelabweichung ($\Theta$, theta) ermittelten Enden definiert ist.

10. Verfahren zum Erzeugen eines Kompatibilitätsindex nach dem vorhergehenden Anspruch, **dadurch gekennzeichnet, dass** der globale Kompatibilitätsvermerk (Hk) von einer Schwellenbereichswinkelgröße (S) abhängt, für die es eine kontinuierliche Gruppe von Winkelabweichungswerten ($\Theta$, theta) gibt, bei denen die Winkelkompatibilitätsindizes ($IND_{th\hat{e}tak}$) unterhalb der HiLo-Schwelle (Hlimit) liegen.

11. Verfahren zum Erzeugen eines Kompatibilitätsindex nach den Ansprüchen 9 und 10, **dadurch gekennzeichnet, dass**, wenn der globale Kompatibilitätsvermerk (Hk) zwischen zwei Enden den diskreten Vermerk "kompatibel (c)" annimmt, alle Winkelkompatibilitätsindizes ($IND_{th\hat{e}tak}$), die für jede der Winkelabweichungen gemessen wurden, unter der HiLo-Schwelle (Hlimit) liegen, und dass, wenn der globale Kompatibilitätsvermerk (Hk) zwischen zwei Enden den diskreten Vermerk "kompatibel vorbehaltlich einer kontrollierten Winkelpräsentation (cc)" annimmt, mindestens ein Bereich (P1) vorhanden ist, dessen Winkelgröße größer als der Schwellenbereich (S) ist.

12. Verfahren nach Anspruch 10 oder 11, **dadurch gekennzeichnet, dass** eine kontinuierliche Gruppe eine Gruppe von Werten der Winkelabweichungen ($\Theta$, theta) ist, die nacheinander in Schritt (d) betrachtet werden.

13. Verfahren nach einem der Ansprüche 9 bis 12, **dadurch gekennzeichnet, dass**, wenn der globale Kompatibilitätsvermerk (Hk) zwischen zwei Enden den diskreten Vermerk "kompatibel vorbehaltlich einer kontrollierten Winkelpräsentation (cc)" annimmt, das Verfahren einen Schritt (f) des Markierens eines zulässigen Bereichs (Za) an einem der beiden Enden aufweist, um winkelmäßig, relativ zur Winkelmarkierung ($M_0$), einen Bereich (P1) zu lokalisieren, dessen Winkelgröße größer ist als der Schwellenbereich und bei dem es eine kontinuierliche Gruppe von Winkelabweichungswerten ($\Theta$, theta) gibt, bei denen die Winkelkompatibilitätsindizes ($IND_{th\hat{e}tak}$) unter der HiLo-Schwelle (Hlimit) liegen.

14. Verfahren zum Erzeugen einer Kompatibilitätsstatistik ($\%Tn$, $\%N_{Tn}$) in einer Gruppe von n Rohren, für die ein globaler Kompatibilitätsvermerk nach dem Verfahren der Ansprüche 1 bis 13 für jedes der Paare möglicher Enden der Gruppe von Rohren bestimmt wurde, und zwar derart, dass für jedes Ende definiert wird:

- der Anteil (a, e) der Kompatibilität "C1" mit allen Enden der anderen Rohre,
- der Anteil (b, f) der teilweisen Kompatibilität "C2" mit allen Enden der anderen Rohre vorbehaltlich einer kontrollierten Winkelpräsentation zwischen den Enden und
- der Anteil (c, g) der Nicht-Kompatibilität "C3" mit allen Enden der anderen Rohre,

wobei diese drei Anteile 100 % ausmachen.

**15.** Verfahren zum Erzeugen einer Kompatibilitätsstatistik nach dem vorhergehenden Anspruch, **dadurch gekennzeichnet, dass** jedes Rohr (Tn) als Kompatibilitätsstatistik (%Tn) die Anteile hat, die von einem seiner beiden Enden mit dem höchsten Anteil an Nicht-Kompatibilität erhalten werden.

**16.** Verfahren zur Partitionierung einer Gruppe von n Rohren, **dadurch gekennzeichnet, dass** die Rohre in Abhängigkeit von den Kompatibilitätsstatistiken eines jeden Rohres, die nach dem Verfahren der Ansprüche 14 oder 15 bestimmt werden, in mindestens zwei Chargen aufgeteilt werden, so dass jede Charge eine äquivalente Anzahl von Rohren mit einem Nicht-Kompatibilitätsanteil C3 enthält, der unter einem Kompatibilitätsschwellenwert liegt.

**17.** Verfahren zur Partitionierung einer Gruppe von n Rohren nach dem vorhergehenden Anspruch, **dadurch gekennzeichnet, dass** es einen Schritt des Markierens der Rohre aufweist, in dessen Verlauf eine Kompatibilitätsmarkierung (Mc) auf mindestens bestimmte Rohre geschrieben wird, wobei die Markierung (Mc) eine aus dem Partitionierungsverfahren nach Anspruch 16 erzeugte Information aufweist und insbesondere die Identifizierung der Rohre mit einem Nicht-Kompatibilitätsanteil C3 ermöglicht, der höher als der Kompatibilitätsschwellenwert ist.

**18.** Elektronisches Endgerät mit einer Schnittstelle zum Lesen einer Kennung eines Rohrs, einer Schnittstelle zum Empfangen von Daten einer Orbitalmessung eines Merkmals, das sich auf das Profil eines Endes dieses Rohrs bezieht; einem Rechner zum Transformieren der Orbitalmessungen in Abhängigkeit von einem virtuellen Zentrum des Endes, wobei der Rechner so konfiguriert ist, dass er ausgehend von dem Verfahren nach einem der Ansprüche 1 bis 13 einen globalen Kompatibilitätsvermerk für ein Rohrpaar erzeugt.

**19.** Anordnung bestehend aus einem elektronischen Endgerät nach Anspruch 18 und einer Gruppe von n Rohren, die jeweils eine Winkelmarkierung ($M_0$) an jedem ihrer distalen Enden aufweisen, wobei jedes distale Ende jedes Rohrs $2*(n-1)$ globale Kompatibilitätsvermerke (Hk) mit jedem der distalen Enden der (n-1) anderen Rohre der Gruppe aufweist, wobei diese globalen Kompatibilitätsvermerke durch die Durchführung des Verfahrens nach einem der Ansprüche 1 bis 13 erhalten werden und die globalen Kompatibilitätsvermerke jedes der Rohrenden mit den Enden der anderen Rohre der Gruppe in dem elektronischen Endgerät gespeichert werden.

**20.** Anordnung nach Anspruch 19, **dadurch gekennzeichnet, dass** der Winkelort, relativ zur Winkelmarkierung ($M_0$), eines Bereichs, dessen Winkelgröße größer ist als der Schwellenbereich und bei dem es eine kontinuierliche Gruppe von Winkelabweichungswerten ($\Theta$, theta) gibt, bei denen die Winkelkompatibilitätsindizes ($IND_{th\hat{e}tak}$) unter der HiLo-Schwelle (Hlimit) liegen, wie in Anspruch 13 erhalten, in dem elektronischen Endgerät für jede der $2*n*(n-1)$ möglichen Kombinationen zwischen diesen n Röhren gespeichert wird.

**21.** Computerprogrammprodukt mit einem Rechner und einem Speicher zur Durchführung der Verfahrensschritte zum Erzeugen eines Kompatibilitätsindex nach einem der Ansprüche 1 bis 13 und/oder zur Durchführung der Verfahrensschritte zum Erzeugen einer Kompatibilitätsstatistik nach einem der Ansprüche 14 oder 15.

**Claims**

**1.** A method for generating an index of compatibility between two ends of two tubes, in particular before welding operations, said method comprising the steps of:

(a) marking an angular reference ($M_0$) on each of the two ends;
(b) orbitally measuring a characteristic relating to the profile of each of the ends;
(c) determining an index ($IND_{thetak}$) of angular compatibility between the two ends for an angular deviation ($\Theta$, theta) between the angular references of said ends, this angular compatibility index being derived from a difference maximum between the orbital measurements, this maximum being searched for facing places of the profile,

(d) iterating the determination of the angular compatibility index for a plurality of values of angular deviation between the angular references of said ends;

(e) generating an overall score (Hk) of compatibility between these two ends, the overall compatibility score being a function of the angular compatibility indexes determined for a plurality of angular deviation values,

said overall score (Hk) of compatibility between the two ends takes a discrete score among:

- compatible (c), or;
- compatible on condition of controlled angular presentation (cc), or alternatively;
- incompatible (nc).

2. The method for generating a compatibility index as claimed in claim 1, **characterized in that** the orbital measurement of a characteristic relating to the profile is a radius measurement.

3. The method for generating a compatibility index as claimed in claim 2, **characterized in that** the orbital measurement is a radius measurement, determined relative to a virtual center (Cv), for which the radius differences are minimal.

4. The method for generating a compatibility index as claimed in one of claims 2 and 3, **characterized in that** the radius measurement is an internal radius measurement, and **in that** a virtual center is determined as a function of the internal radii.

5. The method for generating a compatibility index as claimed in one of claims 2 and 3, **characterized in that** the radius measurement is an external radius measurement.

6. The method for generating a compatibility index as claimed in the preceding claim, **characterized in that** the orbital measurement is an external radius measurement, determined relative to a virtual center (Cv), for which differences between internal radii are minimal.

7. The method for generating a compatibility index as claimed in one of the preceding claims, **characterized in that** the orbital measurement is carried out according to the same clock convention relative to the angular reference, so that for a given angular deviation ($\Theta$, theta) between the angular references of the two tubes, for each measurement angle ($\varphi$, phi), the difference calculation between the value of the orbital measurement at this measurement angle on a first tube and the value of the orbital measurement observed on the second tube at an angle which is the inverse of this measurement angle is iterated, this inverse angle (360° - $\varphi$; 360-phi) corresponding to 360° minus the value of the measurement angle ($\varphi$, phi), so that after these iterations, the iteration for which the difference of orbital measurements of the two facing ends is maximal as well as the value of this maximum difference corresponding to the difference maximum between the orbital measurements for this angular deviation ($\Theta$, theta) are identified.

8. The method for generating a compatibility index as claimed in one of the preceding claims, **characterized in that** step (d) is carried out for angular deviation values increasing successively by a step of less than 5°, and preferably with a step of 1°, between each angular deviation.

9. The method for generating a compatibility index as claimed in one of the preceding claims, **characterized in that** the overall compatibility score (Hk) depends on a HiLo threshold (Hlimit) defined as a maximum tolerance threshold for all the angular compatibility indexes ($IND_{thetak}$) between the two ends which are determined for each angular deviation ($\Theta$, theta).

10. The method for generating a compatibility index as claimed in the preceding claim, **characterized in that** the overall compatibility score (Hk) depends on the threshold range angular size (S) for which there is a continuous group of angular deviation values ($\Theta$, theta) in which the angular compatibility indexes ($IND_{thetak}$) are less than the HiLo threshold (Hlimit).

11. The method for generating a compatibility index as claimed in claims 9 and 10, **characterized in that** when the overall score (Hk) of compatibility between two ends takes the discrete score "compatible (c)", all the angular compatibility indexes ($IND_{thetak}$) measured for each of the angular deviations are less than the HiLo threshold (Hlimit), and **in that** when the overall score (Hk) of compatibility between two ends takes the discrete score "compatible on condition of controlled angular presentation (cc)", there is at least one range (P1) of which the angular size is greater than the threshold range (S).

12. The method as claimed in claim 10 or 11, **characterized in that** a continuous group is a group of values of angular deviations ($\Theta$, theta) considered successively in step (d).

13. The method as claimed in one of claims 9 to 12, **characterized in that** when the overall score (Hk) of compatibility between two ends takes the discrete score "compatible on condition of controlled angular presentation (cc)", the method comprises a step (f) of marking an allowable zone (Za) on one of the two ends in order to angularly locate, relative to the angular marking ($M_0$), a range (P1) of which the angular size is greater than the threshold range and in which there is a continuous group of angular deviation values ($\Theta$, theta) in which the angular compatibility indexes ($IND_{thetak}$) are less than the HiLo threshold (Hlimit).

14. A method for generating a compatibility statistic (%Tn, $\%N_{Tn}$) in a group of n tubes for which an overall compatibility score has been determined as per the method of claims 1 to 13 for each of the possible pairs of ends of the group of tubes, such that the following are defined for each end:

   - its proportion (a, e) of compatibility "C1" with all the ends of the other tubes
   - its proportion (b, f) of partial compatibility "C2" with all the ends of the other tubes on condition of a controlled angular presentation between the ends, and
   - its proportion (c, g) of incompatibility "C3" with all the ends of the other tubes, these three proportions making up 100%.

15. The method for generating a compatibility statistic as claimed in the preceding claim, **characterized in that** each tube (Tn) has as a compatibility statistic (%Tn) the proportions obtained by one of its two ends having the greater proportion of incompatibility.

16. A method for dividing a group of n tubes, **characterized in that** the tubes are distributed into at least two batches as a function of the compatibility statistics of each of the tubes which are determined as per the method of claims 14 and 15, such that each batch comprises an equivalent number of tubes having a proportion of incompatibility C3 less than a compatibility threshold.

17. The method for dividing n tubes as claimed in the preceding claim, **characterized in that** it comprises a step of marking the tubes, during which a compatibility marking (Mc) is written on at least certain tubes, the marking (Mc) comprising information generated on the basis of the division method of claim 16, and in particular the marking makes it possible to identify the tubes having a proportion of incompatibility C3 greater than said compatibility threshold.

18. An electronic terminal having an interface for reading an identifier of a tube, an interface for receiving orbital-measurement data of a characteristic relating to the profile of an end of this tube; a calculator for transforming the orbital measurements as a function of a virtual center of said end, said calculator being configured to generate an overall score of compatibility of a pairing of tubes on the basis of the method of any one of claims 1 to 13.

19. An assembly composed of an electronic terminal as claimed in claim 18 and a group of n tubes, each having an angular marking ($M_0$) at each of their distal ends, each distal end of each tube having 2*(n-1) overall scores (Hk) of compatibility with each of the distal ends of the (n-1) other tubes of the group, these overall compatibility scores being obtained by carrying out the method as claimed in any one of claims 1 to 13, the overall scores of compatibility of each of the tube ends with the ends of other tubes of the group being stored in the electronic terminal.

20. The assembly as claimed in claim 19 **characterized in that** the angular location, relative to the angular marking ($M_0$), of a range of which the angular size is greater than the threshold range, and in which there is a continuous group of angular deviation values ($\Theta$, theta) in which the angular compatibility indexes ($IND_{thetak}$) are less than the HiLo threshold (Hlimit), as obtained in claim 14, is stored in the electronic terminal for each of the 2*n*(n-1) possible combinations between these n tubes.

21. A computer program product having a calculator and a memory for carrying out the steps of the method for generating a compatibility index as claimed in any one of claims 1 to 14, and/or carrying out the steps of the method for generating a compatibility statistic as claimed in one of claims 15 and 16.

FIG.1

FIG.2

FIG.3

FIG.4

FIG.5

FIG.6

FIG.7A

FIG.7B

FIG.8

FIG.9A

FIG.9B

FIG.10

| N° | C1 (%) | C2 (%) | C3 (%) |
|---|---|---|---|
| | | | |
| | | | |
| 10110 | NA | 24,20 | 75,80 |
| 10252 | 24,58 | 69,04 | 6,38 |
| 10508 | 7,13 | 81,80 | 11,07 |
| 10162 | NA | 27,95 | 72,05 |
| 10472 | NA | 11,07 | 88,93 |
| 10232 | 11,07 | 84,24 | 4,69 |
| | | | |
| Tn | 52 | 33 | 15 |
| | | | |

# FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9074881 B
- WO 2009126023 A
- US 6273320 B
- US 2017276260 A
- US 7325326 B